(19) **Europäisches Patentamt / European Patent Office / Office européen des brevets**

(11) **EP 2 305 402 B1**

(12) **EUROPEAN PATENT SPECIFICATION**

(45) Date of publication and mention of the grant of the patent:
**29.11.2017 Bulletin 2017/48**

(51) Int Cl.:
*B22F 9/24* (2006.01)   *B22F 1/00* (2006.01)
*B22F 9/00* (2006.01)   *C09C 1/62* (2006.01)
*C09C 3/10* (2006.01)   *H01B 1/22* (2006.01)
*H01B 5/00* (2006.01)   *C22C 5/06* (2006.01)
*C01G 5/00* (2006.01)   *B82Y 30/00* (2011.01)

(21) Application number: **09770019.9**

(22) Date of filing: **10.06.2009**

(86) International application number:
**PCT/JP2009/060587**

(87) International publication number:
**WO 2009/157309 (30.12.2009 Gazette 2009/53)**

(54) **METHOD FOR PRODUCING SILVER-CONTAINING POWDER AND CONDUCTIVE PASTE USING THE SAME**

HERSTELLUNGSVERFAHREN FÜR SILBERHALTIGES PULVER UND DIESES VERWENDENDE LEITENDE PASTE

PROCÉDÉ DE PRODUCTION DE POUDRE CONTENANT DE L'ARGENT ET PÂTE CONDUCTRICE L UTILISANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **26.06.2008 JP 2008167262**
**11.11.2008 JP 2008288651**
**24.03.2009 JP 2009071732**

(43) Date of publication of application:
**06.04.2011 Bulletin 2011/14**

(73) Proprietor: **DIC Corporation**
**Tokyo 174-8520 (JP)**

(72) Inventors:
• **TAKAHASHI Akeo**
**Sakura-shi**
**Chiba 285-8668 (JP)**
• **KAWAMURA Kaori**
**Sakura-shi**
**Chiba 285-8668 (JP)**
• **LEE SeungTaeg**
**Sakura-shi**
**Chiba 285-8668 (JP)**
• **JIN Ren-Hua**
**Sakura-shi**
**Chiba 285-8668 (JP)**
• **MATSUKI Koichiro**
**Sakura-shi**
**Chiba 285-8668 (JP)**
• **KAJII Tomoyo**
**Sakura-shi**
**Chiba 285-8668 (JP)**

(74) Representative: **Maschio, Antonio et al**
**Maschio & Soames IP Limited**
**30 Carlton Crescent**
**Southampton SO15 2EW (GB)**

(56) References cited:
EP-A1- 1 844 884      WO-A1-2008/018123
JP-A- 2003 013 106    JP-A- 2003 103 158
JP-A- 2003 103 158    JP-A- 2006 097 097
JP-A- 2007 186 777    JP-A- 2007 308 797
JP-A- 2008 037 884    JP-A- 2008 037 884
US-A1- 2005 194 577

**Description**

Technical Field

The present invention relates to powder containing silver nanoparticles having an average particle size of 2 to 50 nm and applications of the powder. Specifically, the present invention relates to silver-containing powder stable in a solid state, the powder being obtained by reducing a silver compound in the presence of a certain compound and by performing a concentration step and a drying step, to a conductive paste that uses the silver-containing powder, and to a plastic substrate obtained by applying the conductive paste.

Background Art

To develop highly-integrated small and thin information devices with high performance, micromachining technologies for semiconductors need to be further developed, and at the same time a reliable packaging technology that makes use of the micromachining technologies is required. A packaging technology includes constituent technologies such as the production of metal fine particles and a minute wiring/connecting technology that uses the metal fine particles in a paste form. The combination of the constituent technologies with a printing technology such as ink jet printing has received attention, and recently many companies have been competing against each other for technical development through various approaches (e.g., refer to PTL 1).

Metal fine particles are normally produced by a method based on a pulverization technology called a top down method or a method performed by understanding the chemical and physical behaviors of molecules or atoms and controlling the behaviors to control a structure, which is called a bottom up method (e.g., refer to PTLs 2 to 4). Since it is difficult to uniformly pulverize particles on the order of nanometers by a top down method, bottom up methods have been receiving attention in recent years.

In metal nanoparticles whose particle size is decreased to a nanometer size, it is known that the surface energy is increased and thus the lowering of melting point is caused on the surfaces of the particles, which easily causes the fusion between metal nanoparticles and degrades the storage stability. Thus, there have been often provided metal nanoparticles that are coated with a protective agent or the like configured to prevent the fusion and dispersed in a solvent so as to form a colloidal dispersion.

In contrast, metal nanoparticles in a dry (solid) state can be easily added to a liquid composition or a solid mixture in various applications. Therefore, it is believed that the applicability is wider than that of a colloidal dispersion and such metal nanoparticles in a dry state are industrially advantageous in terms of transportation and storage. However, in the case of obtaining powder (solid) that contains metal nanoparticles by simply distilling off and evaporating a dispersion solvent from a dispersion liquid in which conventionally provided metal nanoparticles are stably dispersed in a colloidal form, such a process is unstable because the adhesion between protective agents that are present on the surfaces of adjacent particles, the fusion between metal nanoparticles that occurs in a portion not sufficiently protected, or the like is easily caused.

In the technology disclosed in PTL 4 or the like the inventors of the present invention have provided, when dispersed powders composed of a polymer compound and metal nanoparticles obtained by the reduction of metal ions were isolated, a dialysis method was employed to remove counterions or the like generated from a metal compound that was used as a raw material. However, the method is unsuitable for industrial use in terms of production cycle and cost. Furthermore, the contents of metals in the powders obtained through dialysis and drying, which were described in Examples of PTL 4 or the like, were less than 92% by mass, and the metals need to be processed at high temperature in order to use them as a conductive material.

There has been provided a method for producing metal fine particles in which, for example, a metal fine particle-containing liquid obtained by reducing metal ions in the presence of an alkali-soluble polymer is dried by freeze drying (e.g., refer to PTL 5). In this method, a large amount of alkali aqueous solution with a pH of about 12 is required to completely dissolve the alkali-soluble polymer. Therefore, to obtain a certain amount of metal-containing powder, high environmental load is required for liquid waste treatment of the alkali aqueous solution used, which means that the method is unsuitable as an industrial production method. Furthermore, each of the contents of metals in the metal-containing powders obtained in Examples of PTL 5 is as low as less than 90% by mass. When the metal-containing powder is used as a conductive material such as a conductive paste, high temperature treatment is considered to be necessary to generate conductivity because a larger amount of solid matter other than a metal is contained in the powder. Since the stabilities described in PTL 5 are dispersion stability achieved when powder is redispersed in an organic solvent immediately after the powder is obtained and storage stability of the redispersion liquid, this does not ensure the storage stability in a solid state (powder).

A method is also provided in which metal fine particles in a solid powder form are obtained by removing an excess dispersant or the like from a dispersion liquid of metal fine particles and by drying it (e.g., refer to PTL 6). However, the method is complicated, and solvents that can be used for redispersion are limited and thus the applications are significantly restricted.

In recent years, it has been demanded that the minute wiring of a conductive paste containing metal nanoparticles can be performed on a plastic substrate. To achieve this, various methods have been considered (e.g., refer to PTL 7 and PTL 8). However, since these methods include a step of removing a protective agent that is a barrier to the generation of conductivity, such methods can be applied to only a plastic substrate having relatively high thermal resistance. Moreover, a plastic substrate and a metal essentially have poor interlayer adhesiveness. In particular, to utilize a flexible plastic wiring substrate, a process of increasing adhesiveness is required, the process including the surface treatment of the substrate and the use of a third component that functions as an anchor. There has not been provided a conductive paste having well-balanced properties including versatility, simplicity, and the like. As an example of the prior art, WO2008018123 describes a metal nanoparticle dispersion characterised by containing a dispersion of polymer compound (X) having polyalkyleneimine chain (a), hydrophilic segment (b) and hydrophobic segment (c) and containing metal nanoparticles (Y).

Citation List

Patent Literature

PTL 1: Japanese Unexamined Patent Application Publication No. 2004-74267
PTL 2: Japanese Unexamined Patent Application Publication No. 11-319538
PTL 3: Japanese Unexamined Patent Application Publication No. 2006-257484
PTL 4: Japanese Unexamined Patent Application Publication No. 2008-37884
PTL 5: Japanese Unexamined Patent Application Publication No. 2007-186777
PTL 6: International Publication No. 2005/037465
PTL 7: Japanese Unexamined Patent Application Publication No. 2002-134878
PTL 8: Japanese Unexamined Patent Application Publication No. 2006-183072

Summary of Invention

Technical Problem

The present invention is defined in independent claims 1 and 5 and certain optional features thereof are defined in the dependent claims. In so far as the terms "invention", "example" and "embodiment" are used herein, this will be interpreted in such a way that the only protection sought is for the invention as claimed.In view of the foregoing, an object of the present invention is to provide a conductive paste obtained by using a silver-containing powder in a dry state that contains silver nanoparticles having an average particle size of 2 to 50 nm in an amount of 95% or more by mass and that has good storage stability and redispersibility, a conductive paste that is obtained using the silver-containing powder and can be fused at low temperature, a plastic substrate obtained by applying and drying the conductive paste, and the production methods thereof that are excellent in industrial productivity. Solution to Problem

As a result of the extensive studies, the inventors of the present invention found that silver-containing powder having a small average particle size and a high content of silver can be obtained by reducing a silver compound in an aqueous medium in the presence of a compound including at least two types of segments that contribute to the generation of high dispersibility and that can fix metal fine particles and reduce metal ions, by adjusting the dispersion state through the addition of an organic solvent, and by performing a concentration step and a drying step. The obtained silver-containing powder has good storage stability in a solid state, and can be easily redispersed in various solvents to obtain a dispersion liquid with high stability. In addition, when the obtained dispersion liquid is applied, high conductivity can be generated through the fusion at low temperature.

The present invention provides the conductive paste as defined by claim 1.

. Also herein is described a plastic substrate obtained by directly applying the conductive paste on a plastic substrate and by performing drying.

The present invention also provides the method for producing silver-containing powder as defined by claim 5.

Advantageous Effects of Invention

The silver-containing powder obtained in the present invention is dry powder that has a certain size and high storage stability and is obtained by coordinating a polymer compound with the surfaces of silver nanoparticles when silver ions are reduced to silver nanoparticles due to, for example, the reducing ability, coordinate bond strength, and electrostatic interaction of a polyethyleneimine chain in the polymer compound used. The silver-containing powder has good redispersibility in water and various organic solvents, and thus a dispersion can be easily prepared. Therefore, the silver-containing powder can be used in the form of the powder itself or a dispersion in accordance with the applications of metal materials and conductive materials.

Since the silver-containing powder obtained in the present invention is composed of silver nanoparticles with a nanometer size and an organic compound and has a certain structure and a high content of silver, the silver-containing powder can be suitably used as a high-quality conductive material or the like. Furthermore, because the silver-containing powder has characteristics as nanometer-size metal fine particles, such as large specific surface, high surface energy, and plasmon absorption, the silver-containing powder has chemical, electrical, and magnetic properties and can be applied to a wide range of fields such as catalysts, electronic materials, magnetic materials, optical materials, various sensors, color materials, and medical examination applications. The method for producing the silver-containing powder of the present invention is based on the reduction reaction of silver ions under mild conditions and has good reproducibility, and the posttreatment method thereof can also be performed with general-purpose equipment. Therefore, this method has an advantage in industrial production.

With the conductive paste of the present invention, a conductive film can be formed on various solid substrates. The glass transition temperatures of the solid substrates may be lower than 180°C, which is the upper limit temperature of thermal resistance. Moreover, with the conductive paste, a film with high adhesiveness can be formed on a planar substrate and a substrate having any shape such as a rod-like shape, a tube-like shape, a fibrous shape, and a shape of a three-dimensional molded product with fine patterning.

Brief Description of Drawings

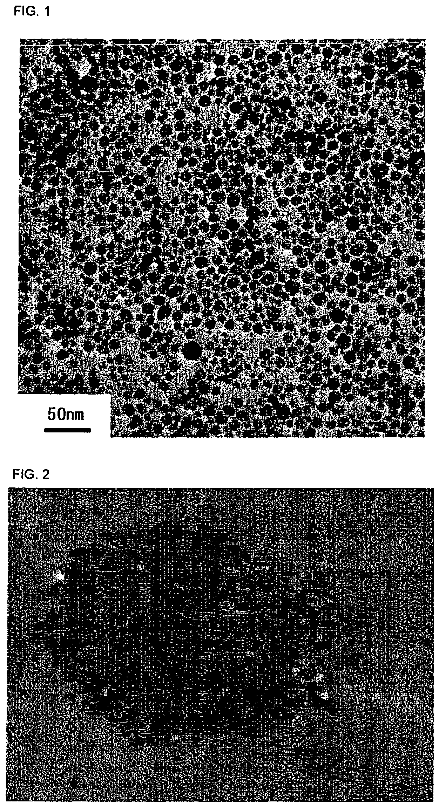

[Fig. 1] Fig. 1 is a TEM image of silver-containing powder obtained in Example 1.
[Fig. 2] Fig. 2 is a photograph of the silver-containing powder obtained in Example 1.

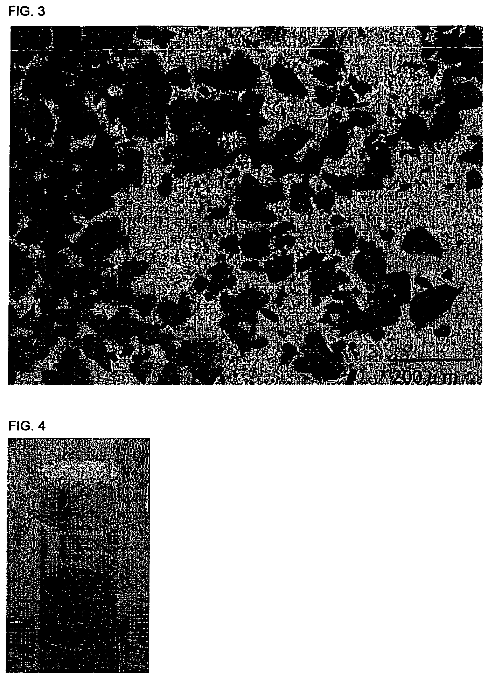

[Fig. 3] Fig. 3 is an optical micrograph of the silver-containing powder obtained in Example 1.
[Fig. 4] Fig. 4 is a photograph of an aqueous dispersion of the silver-containing powder obtained in Example 1.

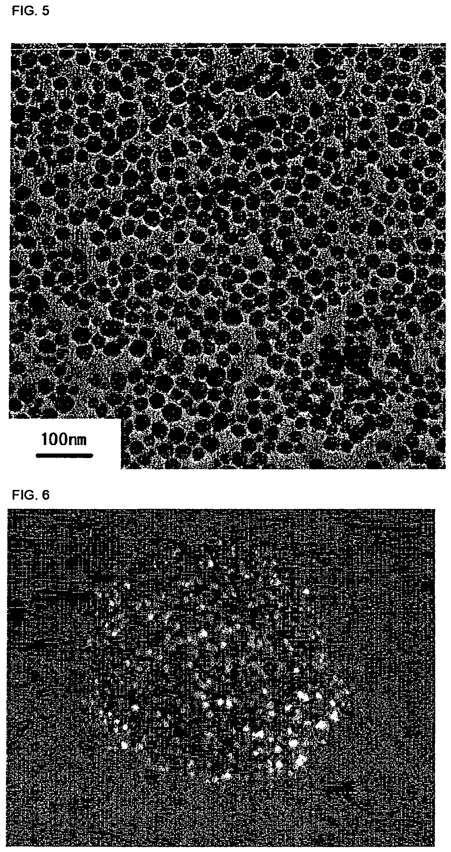

[Fig. 5] Fig. 5 is a TEM image of silver-containing powder obtained in Example 2.
[Fig. 6] Fig. 6 is a photograph of the silver-containing powder obtained in Example 2.
[Fig. 7] Fig. 7 is a photograph of an aqueous dispersion of the silver-containing powder obtained in Example 2.
[Fig. 8] Fig. 8 is a DSC measurement result of a silver film obtained using a dispersion obtained in Example 7. A broken line indicates the case where an acid is not used, and a solid line indicates the case where an acid is used.

Description of Embodiments

Silver-containing powder of the present invention includes silver nanoparticles (Z) having an average particle size of 2 to 50 nm determined from a transmission electron micrograph, surfaces of the silver nanoparticles (Z) being coated with a compound (X) obtained by bonding polyethylene glycol (b) having a number average molecular weight of 500 to 5,000 to an amino group in polyethyleneimine (a) having a number average molecular weight of 500 to 50,000 or a compound (Y) obtained by bonding polyethylene glycol (b) having a number average molecular weight of 500 to 5,000 and a linear epoxy resin (c) to an amino group in polyethyleneimine (a) having a number average molecular weight of 500 to 50,000, wherein the content of silver in the silver-containing powder is 95% or more by mass.

The silver nanoparticles (Z) of the present invention mean particles whose particle size, which is determined from a transmission electron micrograph, is in the order of nanometers and whose shape is not necessarily spherical. The number average molecular weight of each segment constituting the compound (X) or the compound (Y) is a value based on that of polystyrene, which is measured by gel permeation chromatography (GPC).

In the polyethyleneimine chain (a) constituting the compound (X) and the compound (Y) used in the present invention, an ethyleneimine unit in the chain can be coordinated with silver and silver ions. Furthermore, the polyethyleneimine chain (a) is a polymer chain that facilitates the reduction of silver ions to form silver nanoparticles (Z) and that stabilizes and holds the silver nanoparticles (Z). The structure includes an ethyleneimine unit as a main repeating unit and may be linear or branched. The polyethyleneimine (a) may be a commercially available material or a synthetic material.

The size of the silver-containing powder of the present invention is affected by not only the molecular weight of the compound (X) or the compound (Y) used and the molecular weight of the polyethyleneimine (a) but also the structure and composition ratio of components constituting the compound (X) or the compound (Y), that is, the polyethyleneimine (a) and a hydrophilic segment (b) described below, and also the linear epoxy resin (c) described below in the case of the compound (Y). The size is also affected by the types of silver used as a raw material. To increase the content of the silver nanoparticles (Z) in the silver-containing powder, a branched polyethyleneimine chain is preferably used.

Since commercially available branched polyethyleneimine is branched using tertiary amine, such commercially available branched polyethyleneimine can be used as a raw material of the compound (X) or the compound (Y) used in the present invention. To obtain silver-containing powder having a preferable particle size that provides silver-containing powder with high storage stability and a dispersion liquid of such silver-containing powder, the branching ratio of (tertiary amine)/(all amines) is preferably in a range of (1 to 49)/(100) on a molar basis. In consideration of ease of industrial production and procurement, the branching ratio is more preferably in a range of (15 to 40)/(100).

If the average molecular weight of a segment of the polyethyleneimine (a) is excessively low, the capability of the compound (X) or the compound (Y) to hold the silver nanoparticles (Z) is easily decreased, which may cause poor storage stability. If the average molecular weight is excessively high, the size of the silver-containing powder is easily increased, which may interfere with the storage stability of a dispersion liquid or paste obtained by redispersing silver-containing powder in various media. Therefore, to achieve better storage stability of silver-containing powder and the dispersion liquid or paste thereof and to increase the content of silver nanoparticles (Z) in the powder, the number average molecular weight is in a range of 500 to 50,000, preferably 1,000 to 40,000, and most preferably 1,800 to 30,000.

In the case where silver-containing powder is dispersed in a hydrophilic organic solvent, if the molecular weight of the polyethylene glycol (b) is excessively low, dispersion stability may be degraded. If the molecular weight is excessively high, dispersed particles may be aggregated with each other. In the silver-containing powder, the storage stability in a solid state and an increase in the content of silver need to be kept in balance. Therefore, the number average molecular weight of a segment of the polyethylene glycol (b) is 500 to 5,000 and preferably 1,000 to 3,000.

The polyethylene glycol (b) may be a commercially available material or a synthetic material. Furthermore, the polyethylene glycol (b) may be a copolymer with other hydrophilic polymers. Examples of the hydrophilic polymers that can be used include polyvinyl alcohol, polyacrylamide, polyisopropylacrylamide, and polyvinylpyrrolidone. To increase the content of silver in the silver-containing powder obtained, the overall molecular weight is preferably 500 to 5,000 even if a copolymer is used.

The compound (Y) used in the present invention includes a linear epoxy resin (c) as a hydrophobic segment. In the case where the compound (Y) is redispersed in water or a hydrophilic solvent, by incorporating a structure derived from the linear epoxy resin (c) in the compound (Y), cores of micelles are formed due to an intramolecular or intermolecular strong association force. As a result, stable micelles are formed and silver nanoparticles (Z) are taken in the micelles, which can provide stable dispersion liquid or paste. In the case where the compound (Y) is redispersed in a hydrophobic organic solvent, good dispersion stability can be achieved because of high affinity for the solvent.

The linear epoxy resin (c) is not particularly limited as long as the linear epoxy resin (c) has a structure that is commercially available or can be synthesized. Examples of the linear epoxy resin (c) include bisphenol A epoxy resin, bisphenol F epoxy resin, biphenyl epoxy resin, naphthalene epoxy resin, naphthalene four-functional epoxy resin, tetramethylbiphenyl epoxy resin, triphenylmethane epoxy resin, tetraphenylethane epoxy resin, epoxy resin obtained by addition reaction of dicyclopentadiene and phenol, phenol aralkyl epoxy resin, epoxy resin including aromatic hydrocarbon formaldehyde resin-modified phenol resin, and xanthene epoxy resin disclosed in Japanese Unexamined Patent Application Publication No. 2003-201333. These resins may be used alone or in combination. Among these epoxy resins, to achieve good adhesiveness to a substrate when silver-containing powder obtained or the dispersion liquid thereof is used as a conductive paste, bisphenol A epoxy resin is preferably used. These epoxy resins themselves may be used as a raw material of the compound (Y) or these epoxy resins may be modified in accordance with the structure or the like of an intended compound (Y). For example, some epoxy groups in the epoxy resin (c) can be opened in advance using a compound having an aromatic ring that interacts with a metal so as to obtain silver-containing powder with higher stability.

The molecular weight of the linear epoxy resin (c) is not particularly limited. However, in the case where the silver-containing powder is redispersed in a hydrophilic organic solvent, if the molecular weight is excessively low, dispersion stability may be degraded. If the molecular weight is excessively high, micelles may be aggregated with each other. In the case where the silver-containing powder is dispersed in a hydrophobic organic solvent, if the molecular weight is excessively low, the dispersibility of micelles is degraded. If the molecular weight is excessively high, the affinity for the solvent cannot be maintained. In view of the foregoing and to easily achieve a high content of silver in solid matter of the silver-containing powder, the number average molecular weight of the linear epoxy resin (c) is normally preferably 100 to 200,000 and particularly preferably 300 to 100,000.

A method for producing the compound (X) and the compound (Y) used in the present invention is not particularly limited, but the method below is preferable because an intended compound can be easily synthesized.

As described above, a commercially available polyethyleneimine or a synthetic polyethyleneimine can be suitably used as the polyethyleneimine (a). First, the case where a branched polyethyleneimine chain is used will be described.

Since the terminal of a branched polyethyleneimine is a primary amine, the compound (X) that can be used in the present invention can be synthesized by modifying the terminal of polyethylene glycol (b) into a functional group that reacts with a primary amine in advance and then by causing reaction. The functional group that reacts with a primary amine is not particularly limited. Examples of the functional group include an aldehyde group, a carboxy group, an isocyanate group, a tosyl group, an epoxy group, a glycidyl group, an isothiocyanate group, a halogen, an acid chloride, and sulfonic acid chloride. Among these functional groups, a carboxy group, an isocyanate group, a tosyl group, an epoxy group, and a glycidyl group are preferable functional groups because of the advantages of production such as reactivity and ease of handling.

Furthermore, a functional group that directly reacts with a primary amine is not necessarily used. A functional group that can be caused to react with a primary amine through various treatments can be used. For example, when polyethylene glycol having a hydroxy group is used, such polyethylene glycol may be caused to react with a polyethyleneimine chain by, for example, glycidylating the polyethylene glycol. Alternatively, after a primary amine of a branched polyethyleneimine chain is converted into a different functional group that can react with polyethylene glycol having a functional group, the polyethyleneimine and the polyethylene glycol can be caused to react with each other to synthesize a compound (X).

In the case where the polyethyleneimine chain (a) is a linear polyethyleneimine chain, the following method is exemplified. First, a polyacylated ethyleneimine chain is synthesized through living polymerization. A polymer compound is then obtained by introducing polyethylene glycol, and the polyacylated ethyleneimine chain is hydrolyzed to obtain a linear polyethyleneimine chain.

A method for synthesizing the compound (Y) used in the present invention has already been provided by the inventors of the present invention in PTL 4, Japanese Unexamined Patent Application Publication No. 2006-213887, and Japanese Patent Nos. 4026662 and 4026664. Thus, such documents can be referred to.

When a repeating unit constituting each of the chains of polyethyleneimine (a) and polyethylene glycol (b) of the compound (X) and the compound (Y) used in the present invention is assumed to be 1 mol, the molar ratio of (a):(b) is not particularly limited. However, to achieve the storage stability of silver-containing powder obtained and the dispersion stability and storage stability of the dispersion liquid thereof, the molar ratio is normally in a range of 1:(1 to 100) and is particularly preferably designed to be 1:(1 to 30).

In the case where the compound (Y) is used, when a repeating unit constituting each of the chains of polyethyleneimine (a), polyethylene glycol (b), and a linear epoxy resin (c) is assumed to be 1 mol, the molar ratio of (a) : (b) : (c) is not particularly limited. However, to achieve the storage stability of silver-containing powder obtained and the dispersion stability and storage stability of the dispersion liquid thereof, the molar ratio is normally in a range of 1:(1 to 100):(1 to 100) and is particularly preferably designed to be 1:(1 to 30):(1 to 30).

The compound (X) and the compound (Y) used in the present invention have the polyethylene glycol (b) and/or a structure derived from the linear epoxy resin (c), in addition to the polyethyleneimine (a) that can stably hold the silver nanoparticles (Z). As described above, in a hydrophilic organic solvent, the segment of the polyethylene glycol (b) displays high affinity for the solvent and the segment of the linear epoxy resin (c) displays a strong association force. Furthermore, in the case where an aromatic ring is included in the linear epoxy resin (c), it is believed that the interaction of $\pi$ electrons in the aromatic ring with silver contributes to the further stabilization of silver-containing powder.

When the compound (X) or the compound (Y) is concentrated and then redispersed in water or a mixed solvent of water and a hydrophilic organic solvent in a purifying step performed later, it is also believed that the structure derived from the polyethylene glycol (b) included in the compound (X) and the compound (Y) contributes to efficient rearrangement of the compound (X) or the compound (Y) and the silver nanoparticles (Z). That is, the structure derived from the polyethylene glycol (b) is unevenly distributed to the solvent side when redispersed, whereby the entire structure derived from the polyethyleneimine (a) in the compound may contribute to stable holding of the silver nanoparticles (Z). As a result, the silver nanoparticles (Z) are stabilized using a minimum necessary amount of compound (X) or compound (Y), and thus the content of silver in the silver-containing powder obtained can be increased. Therefore, it is believed that the outermost surface of the thus-obtained silver-containing powder is covered with the structure derived from the polyethylene glycol (b), which is a factor that causes the powder to easily redisperse without using an additional dispersant to prepare a dispersion liquid or paste having high stability.

The first step of the production method according to the present invention is a step of dissolving or dispersing the compound (X) or the compound (Y) in an aqueous medium, that is, water or a mixed solvent of water and a hydrophilic organic solvent. Although the solubility or dispersibility in the aqueous medium differs depending on the combination of the polyethyleneimine (a) and the polyethylene glycol (b) and also the epoxy resin (c) in the case of the compound (Y), uniform dissolution or dispersion is required. Any hydrophilic organic solvent may be used as long as at least 5 parts by mass of the hydrophilic organic solvent is mixed with 100 parts by mass of water at 25 to 35°C and a uniform mixed solvent is obtained. Examples of the hydrophilic organic solvent include methanol, ethanol, isopropyl alcohol, n-propyl alcohol, tetrahydrofuran, dioxane, acetone, methyl ethyl ketone, dimethylacetamide, dimethylformamide, ethylene glycol, propylene glycol, ethylene glycol monomethyl ether, propylene glycol monomethyl ether, ethylene glycol dimethyl ether, propylene glycol dimethyl ether, diethylene glycol, glycerin, dimethyl sulfoxide, dioxirane, N-methylpyrrolidone, dimethylimidazolidinone, and sulfolane. These hydrophilic organic solvents may be used alone or in combination. Alternatively, ionic liquids may be used.

6

In terms of ease of handling, ease of causing reduction reaction of silver ions, and an increase in the content of silver in the silver-containing powder obtained, the concentration of the compound (X) or the compound (Y) is preferably 1 to 20% by mass and more preferably 2 to 15% by mass relative to the total amount of the compound (X) or the compound (Y) and the aqueous medium. Herein, if the solubility or dispersibility of the compound (X) or the compound (Y) is insufficient, the solubility or dispersibility can be adjusted by using a mixed solvent combined with, for example, ethyl acetate, propyl acetate, butyl acetate, isobutyl acetate, ethylene glycol monomethyl ether acetate, or propylene glycol monomethyl ether acetate. The compound (X) or the compound (Y) can be normally dissolved or dispersed by being left to stand at room temperature or being stirred. If necessary, ultrasonic treatment, heat treatment, or the like may be performed. In the case where the affinity of the compound (X) or the compound (Y) for the aqueous medium is low due to the crystallinity thereof, for example, the compound (X) or the compound (Y) may be dissolved or swelled using a small amount of good solvent and then dispersed in the intended aqueous medium. In this case, ultrasonic treatment or heat treatment effectively causes the dispersion.

After the solution or dispersion liquid of the compound (X) or the compound (Y) is prepared, a silver compound is mixed therein. Herein, to increase the content of silver in the silver-containing powder obtained, 400 to 9900 parts by mass of silver is preferably used relative to 100 parts by mass of the compound (X) or the compound (Y). Furthermore, to increase the productivity by reducing the amount of aqueous medium used and to easily perform the control of reduction reaction, the mixing is preferably performed so that the nonvolatile content is 2 to 80% by mass. More preferably, 900 to 9900 parts by mass of silver is used relative to 100 parts by mass of the compound (X) or the compound (Y) so that the nonvolatile content is 3 to 50% by mass.

Any silver compound can be used as long as silver nanoparticles (Z) are obtained through reduction reaction. Examples of the silver compound include silver nitrate, silver oxide, silver acetate, silver fluoride, silver acetylacetonate, silver benzoate, silver carbonate, silver citrate, silver hexafluorophosphate, silver lactate, silver nitrite, silver pentafluoropropionate, silver perchlorate, silver sulfate, silver chloride, silver bromide, silver iodide, silver sulfite, silver tetrafluoroborate, silver p-toluenesulfonate, and silver trifluoroacetate. In terms of ease of handling and industrial procurement, silver nitrate or silver oxide is preferably used.

In the above-described step, a method for mixing the silver compound with the aqueous medium in which the compound (X) or the compound (Y) has been dissolved or dispersed is not particularly limited. A method in which a silver compound is added to a medium in which the compound (X) or the compound (Y) has been dissolved or dispersed may be employed. A method of mixing such materials with each other in an opposite way may also be employed. Alternatively, such materials may be mixed with each other while being charged into a different container at the same time. The mixing method such as stirring is also not particularly limited.

In this case, to accelerate the reduction reaction, heat treatment may be optionally performed to increase the temperature to about 30 to 70°C or a reducing agent may be used together.

The reducing agent is not particularly limited. To easily control the reduction reaction and easily remove the reducing agent from a reaction system in the purifying step performed later, for example, hydrogen; a boron compound such as sodium borohydride or ammonium borohydride; an alcohol such as methanol, ethanol, propanol, isopropyl alcohol, ethylene glycol, or propylene glycol; an aldehyde such as formaldehyde, acetaldehyde, or propionaldehyde; an acid such as ascorbic acid, citric acid, or sodium citrate; or a hydrazine such as hydrazine or hydrazine carbonate is preferably used. Among these reducing agents, sodium borohydride, ascorbic acid, and sodium citrate are more preferable because of their ease of handling and industrial procurement and the like.

The amount of the reducing agent added is not particularly limited as long as the amount is more than that required for reducing silver ions, and the upper limit is not particularly specified. However, the amount of the reducing agent is preferably 10 times or less the amount of the silver ions by mole and more preferably 2 times or less the amount of the silver ions by mole.

The method for adding the reducing agent is not limited. For example, the reducing agent can be directly mixed or can be mixed after being dissolved or dispersed in an aqueous solution or other solvents. The timing at which the reducing agent is added is also not limited. The reducing agent may be added to the solution or dispersion liquid of the compound (X) or the compound (Y) in advance or may be added at the same time when the silver compound is mixed. Alternatively, the reducing agent may be added several hours after the silver compound is mixed with the solution or dispersion liquid of the compound (X) or the compound (Y).

When a material such as silver oxide or silver chloride that is not dissolved in an aqueous medium or is not easily dissolved in an aqueous medium is used, a complexing agent may be used together. Examples of the complexing agent include propylamine, butylamine, diethylamine, dipropylamine, triethylamine, ammonia, ethylenediamine, N,N,N',N'-tetramethylethylenediamine, 1,3-diaminopropane, N,N,N',N'-tetramethyl-1,3-diaminopropane, triethylenetetramine, methylaminoethanol, dimethylaminoethanol, ethanolamine, diethanolamine, methyldiethanolamine, propanolamine, butanolamine, and dimethylaminopropanol.

The amount of the complexing agent added is not limited as long as the amount is sufficient for forming a complex through the coordination of silver oxide or the like, and the upper limit is not particularly specified. However, the amount of the complexing agent is preferably 40 times or less the amount of the silver oxide or the like used by mole and more preferably 20 times or less the amount of the silver oxide or the like used by mole. The method for adding the complexing agent is not limited. For example, the complexing agent can be directly mixed or can be mixed after being dissolved or dispersed in an aqueous solution or other solvents.

Although the time required for the reduction reaction in the step (1) depends on the presence or absence of a reducing agent and the type of the compound (X) or the compound (Y), the time is normally 0.5 to 48 hours. In terms of industrial production, the time is preferably adjusted to 0.5 to 24 hours. The time can be adjusted by controlling the temperature increased by heating, the amount of a reducing agent or a complexing agent added, the timing at which the reducing agent or the complexing agent is added, or the like.

After the step (1), a step (2) of adding an organic solvent and then performing concentration is conducted. The concentration method is not particularly limited, and at least one of dialysis, centrifugal separation, and precipitation may be used. The organic solvent that can be used herein is not particularly limited. However, to shorten the time required for a concentration step, reuse the organic solvent, and easily perform mixing with the mixture obtained in the step (1), an organic solvent having a boiling point of 120°C or lower and desirably 100°C or lower is preferably used. In particular, a mixed solvent of a hydrophilic organic solvent and a hydrophobic organic solvent is preferably used. The amount of the organic solvent used is also not particularly limited, and is preferably 1.5 to 5 times the amount of the mixture obtained in the step (1) and more preferably 2 to 3 times the amount of the mixture. In terms of industrial production, centrifugal separation is preferably adopted as a concentration method. This centrifugal concentration step is performed in order to remove part of the medium used in the step (1), the optionally added reducing agent or complexing agent, counterions of silver ions, and the like. Therefore, a concentration method according to the materials used in the step (1) is preferably employed, and the concentration is performed until the nonvolatile content reaches 30% or more by mass and preferably 50% or more by mass.

After the concentration, drying is performed to further remove the medium left. The drying may be performed by drying under reduced pressure or freeze drying. To easily obtain silver-containing powder having a high content of silver, freeze drying is preferred.

In the case of drying under reduced pressure, the drying is preferably performed at 40°C or lower and particularly preferably 30°C or lower. Thus, the degree of vacuum needs to be adjusted so that the dispersion medium can be sufficiently removed at that temperature.

In freeze drying, silver-containing powder in a slurry or solid state is frozen and left to stand under reduced pressure, whereby a medium is evaporated. Thus, preliminary freezing is performed and then pressure needs to be reduced. These processes will be described one by one.

First, preliminary freezing is performed. This process is performed by cooling silver-containing powder in a slurry or solid state. The cooling temperature is not limited as long as the silver-containing powder is frozen. For example, a temperature of 0°C or lower and -90°C or higher can be preferably adopted. If the temperature is lower than -90°C, excess energy is merely consumed and the properties of silver-containing powder obtained are not affected. If the temperature is higher than 0°C, freezing cannot be achieved. The time required for freezing is not particularly limited, and is normally about 30 minutes to 6 hours.

Preferably, before performing freezing, water is further added to the concentrate obtained in the step (2). By separately adding water, the solvents other than water that are present in the concentrate can be easily removed by causing azeotrope with water. Furthermore, the silver nanoparticles (Z) can be efficiently recoated due to the electrostatic interaction between the structure derived from the polyethyleneimine (a) in the compound (X) or the compound (Y) and the structure derived from the polyethylene glycol (b), a hydrogen bond, and the interaction between the silver nanoparticles (Z) and an ethyleneimine unit. As a result, the storage stability of powder after drying is improved, and good redispersibility is achieved when the powder is redispersed in a solvent or paste is prepared. This can provide advantages that the particle size of silver-containing powder is made uniform and a film formed using such silver-containing powder produces conductivity.

The amount of water added is not particularly limited. However, to efficiently produce the above-described advantages and shorten the time required for the drying step in a balanced manner, the amount of water added is normally 0.01 to 100 times the weight of solid matter in the concentrate and preferably 0.1 to 10 times the weight of solid matter in the concentrate.

To control the freeze drying rate and the degree of freezing, the freeze drying can be performed using an organic solvent together. Examples of the organic solvent that can be used include alcohols such as methanol, ethanol, and propanol; polyols such as ethylene glycol, diethylene glycol, propylene glycol, trimethylolpropane, and glycerin; ketones such as acetone and methyl ethyl ketone; esters such as methyl acetate, ethyl acetate, butyl acetate, and ethyl formate; nitriles such as acetonitrile and propionitrile; ethers such as dimethoxyethane, dioxane, and tetrahydrofuran; halogenated hydrocarbons such as methylene chloride and chloroform; amides such as dimethylformamide and dimethylacetamide; cyclic esters such as ethylene carbonate, propylene carbonate, butyrolactone, and propiolactone; other materials such as dimethyl sulfoxide, dimethylimidazolidinone, N-methylpyrrolidone, hexamethylphosphoric triamide, and hexamethylphosphorous triamide. The amount of the solvent added is preferably in a range of 0.001 to 1 times the weight of solid matter in the concentrate.

Next, a pressure reducing process will be described. In the pressure reducing process, a pressure reduced state may be achieved by using a commercially available freeze drier. Specifically, to sublimate frozen water, the pressure is normally 620 Pa or less, preferably 100 Pa or less, and more preferably 40 Pa or less.

When performing the pressure reducing process, the pressure is not necessarily reduced to a certain degree of vacuum immediately. To remove volatile matter, a relatively high pressure is maintained and then the pressure may be reduced to a certain degree of vacuum.

Through the steps such as mixing of an organic solvent, concentration, and redispersion and drying performed optionally, the silver-containing powder obtained has good storage stability in a solid state and achieves high uniformity when redispersed in various solvents. Furthermore, the average particle size can be decreased. Since the content of silver in silver-containing powder can be increased, silver-containing powder that can be suitably used as a conductive paste or the like can be produced with high efficiency.

Metal fine particles having a size of several tens of nanometers normally have distinctive optical absorption caused by surface plasmon excitation in accordance with the types of metals. Therefore, by measuring the plasmon absorption of the silver-containing powder obtained in the present invention, it can be confirmed that silver in the powder is present in the form of fine particles having a nanometer size, that is, silver in the powder is present as silver nanoparticles (Z). Furthermore, the shape, particle size, or the like of the powder can be observed from a micrograph of TEM (transmission electron microscope) of a film formed by casting the dispersion.

As described above, the production method of the present invention has an advantage in terms of industrial production because the production method can be performed with general-purpose equipment under mild conditions such as spontaneous reduction reaction in an aqueous medium, a general-purpose concentration step, and the addition of water and drying performed optionally, and also the solvents used can be isolated or separated in the concentration and drying steps and therefore reused. Moreover, since the silver-containing powder obtained is easily redispersed in any solvent or mixed with other compounds, products can be designed in accordance with intended applications and thus the silver-containing powder obtained is highly useful.

Conventionally, an aqueous dispersion that uses silver-containing powder and whose silver content in solid matter is up to about 90% has been produced, but it has been very difficult to produce, at low cost, an aqueous dispersion whose silver content is more than 90%. For example, many random copolymers of hydrophilic monomers and monomers having a coordinative ability with a metal are known. However, when silver-containing powder is produced using the random copolymers, it is difficult to combine a hydrophilicity with a coordinative ability with silver. As a result, a dispersion is obtained only when a large amount of polymers are used. Thus, a polymer (e.g., (multi)block copolymer or graft copolymer) having a structure including both a segment having a coordinative ability with silver and a segment having a hydrophilicity is used. In this case, however, a low-molecular-weight complexing agent or a reducing agent needs to be added to the system in a supplementary manner. This poses a problem in that, after a dispersion of silver-containing powder is prepared in a good dispersion state, it is difficult to separate the silver-containing powder from an excess low-molecular-weight complexing agent or reducing agent and a reaction product between the complexing agent and the reducing agent. To solve the problem, equipment investment for dialysis process or the like, which is unsuitable for industrial production, is required or a complicated step disclosed in, for example, PTL 6 is needed.

In the present invention, the above-described problem is solved by causing reduction reaction of a silver compound using a certain compound (X) or compound (Y) and subsequently by performing the above-described concentration/drying step.

In the silver-containing powder of the present invention, the content of silver in solid matter of the powder is necessarily 95% or more by mass, and can be set to 96% or more by mass if the above-described production method is employed. By increasing the content of silver, a low resistance value, which is an essential property for a conductive material, can be easily achieved. In other words, such a high content of silver and high stability can produce desired conductivity (low resistance value) only by performing heating at low temperature (up to 180°C), which has not been achieved with conventional silver fine particles, a dispersion of the silver fine particles, and a conductive paste using the silver fine particles or the dispersion. Furthermore, to use silver-containing powder as, for example, a raw material of a conductive paste suitably used for the above-described minute wiring or the like, the average particle size of silver nanoparticles (Z) contained in the silver-containing powder is preferably as small as possible. The silver nanoparticles (Z) contained in the silver-containing powder obtained in the present invention have an average particle size of 2 to 50 nm, which is an average particle size of 100 particles randomly sampled from a micrograph of TEM observation. Such a small average particle size that has not been achieved is distinctive and competitive.

Conventionally, a desired conductive film has not been easily formed unless a conductive paste is heated to high temperature such as 250 to 350°C. In other words, by heating a conductive paste to high temperature, a protective agent or the like that has stabilized metal fine particles is decomposed and partly removed. Consequently, the content of components other than a metal in a film is decreased and the metal fine particles are fused, whereby conductivity is developed. If the particle size of the metal fine particles is decreased, the temperature required for the fusion can be decreased. However, a decrease in particle size requires a large amount of protective agent to be used to protect the metal fine particles, and thus the content of a metal in solid matter cannot be increased. That is, in related art, an increase in the content of a metal and a decrease in the particle size of metal fine particles are in a relationship of a tradeoff, and the present invention solves this tradeoff.

As described above, in the silver-containing powder of the present invention, the average particle size of the silver nanoparticles (Z) contained therein is small and the content of silver is high. The melting point measured by differential scanning calorimetry is preferably 100 to 250°C and particularly preferably 130 to 200°C. By setting the melting point within the temperature range, the silver-containing powder can be applied to a glass substrate and a plastic substrate, on which it has been difficult to form a conductive film because of their low thermal resistance.

The silver-containing powder of the present invention may include one silver nanoparticle (Z) and one compound (X) or one compound (Y) or may include a plurality of silver nanoparticles (Z) and a plurality of or multiple types of compounds (X) or compounds (Y).

In the silver-containing powder of the present invention, the particles of the powder are aggregated in a dry state and thus are not suspended. For example, according to the measurement of suspended particles that uses the air sampled in a workplace of the silver-containing powder of the present invention, the concentration is 0.005 mg/m$^3$ or less, which is much lower than 3 mg/m$^3$ that is the permissible concentration of environmental management. This means the silver-containing powder has a characteristic of not flying. An ethyleneimine unit of the polyethyleneimine (a) in the compound (X) or the compound (Y) used in the present invention efficiently forms a hydrogen bond with the adjacent compound (X) or compound (Y) in the silver-containing powder at high density while forming a coordinate bond with the silver nanoparticles (Z). Furthermore, there is an interaction caused by Van der Waals force between the compounds (X) or the compounds (Y) that form a coordinate bond with the silver nanoparticles (Z). Therefore, it is believed that the particles of the silver-containing powder are aggregated with each other in a dry state. This is obvious from TEM observation that shows the powder has a particle size of several tens of micrometers, and thus the flying of suspended particles is believed to be suppressed.

The silver-containing powder obtained in the present invention can be redispersed in various solvents to prepare a dispersion liquid. The concentration herein is not particularly limited, and can be adjusted in accordance with the applications. The concentration of the silver-containing powder in a dispersion liquid is normally 10 to 70% by mass, and preferably 20 to 60% by mass to achieve a wide range of applications. The solvent used herein is not particularly limited. Examples of the solvent include water, methanol, ethanol, isopropyl alcohol, n-propyl alcohol, tetrahydrofuran, dioxane, acetone, methyl ethyl ketone, dimethylacetamide, dimethylformamide, ethylene glycol, propylene glycol, ethylene glycol monomethyl ether, propylene glycol monomethyl ether, ethylene glycol dimethyl ether, propylene glycol dimethyl ether, diethylene glycol, glycerin, dimethyl sulfoxide, dioxirane, N-methylpyrrolidone, dimethylimidazolidinone, and sulfolane. These solvents may be used alone or in combination. Among the solvents, a solvent composed of a compound having a hydroxyl group is preferably used as a solvent for redispersion because uniform dispersibility is easily achieved. The redispersion method is not particularly limited. The silver-containing powder in a solid state may be added to a solvent while the solvent is stirred, or a solvent may be added to the silver-containing powder in a solid state.

In the case where a compound is redispersed in a hydrophobic organic solvent, the silver-containing powder is preferably obtained using the compound (Y). This may be because the silver-containing powder is stabilized in the solvent by rearranging the structure derived from the linear epoxy resin (c) in the compound (Y) on the outermost surface of the powder. Therefore, it takes a slightly longer time in the redispersion step compared with the case where water, a hydrophilic organic solvent, or a mixed solvent thereof is used. To further increase the productivity, the concentration is preferably set to 20 to 60% by mass, and a dispersion technique such as ultrasonic treatment is preferably employed together in addition to simple stirring.

The silver-containing powder of the present invention or the dispersion liquid thereof prepared as described above can be suitably used as a conductive paste by being optionally combined with other compounds or the like. In particular, a conductive paste that can be sintered at lower temperature can be obtained by combining the silver-containing powder with a compound (II) having a functional group that can react with a nitrogen atom in the polyethyleneimine (a). The mixing method is not particularly limited. For example, the compound (II) can be directly mixed or can be mixed after being dissolved or dispersed in an aqueous solution or other solvents.

The compound (II) is an aldehyde that produces an alcohol through the reaction with a nitrogen atom in the polyethyleneimine (a), forms an amide bond, and forms quaternary ammonium ions, an epoxy compound, an acid anhydride, a carboxylic acid or an inorganic acid. Examples of the compound (II) include formaldehyde, acetaldehyde, propionaldehyde, acrolein, benzaldehyde, cinnamaldehyde, perillaldehyde, ethylene oxide, propylene oxide, butylene oxide, 2,3-butylene oxide, isobutylene oxide, 1-methoxy-2-methylpropylene oxide, glycidyl butyrate, glycidyl methyl ether, 1,2-epoxyhexane, 1,2-epoxyheptane, 1,2-epoxyoctane, 1,2-epoxydecane, 1,2-epoxydodecane, 1,4-butanedioldiglycidyl ether, 1,2-epoxy-5-hexene, 1,2-epoxy-9-decene, 2-phenylpropylene oxide, stilbene oxide,ethyl glycidyl ether, butyl glycidyl ether, glycidyl isopropyl ether, tert-butyl glycidyl ether, allyl glycidyl ether, glycidyl phenyl ether, benzyl glycidyl ether, glycidyl stearate, epoxysuccinic acid, 1,5-hexadiene diepoxide, 1,7-octadiene diepoxide, 2,2-bis(4-glycidyloxyphenyl)propane, ethylene glycol diglycidyl ether, neopentyl glycol diglycidyl ether, acetic anhydride, maleic anhydride, citraconic anhydride, diacetyl tartaric anhydride, phthalic anhydride, 1,2-cyclohexanedicarboxylic anhydride, 1-cyclohexene-1,2-dicarboxylic anhydride, o-acetylmalic anhydride, (2-methyl-2-propenyl)succinic anhydride, 1,2-naphthalic anhydride, 2,3-naphthalenedicarboxylic anhydride, 2,3-anthracenedicarboxylic anhydride, 2,3-dimethylmaleic anhydride, 3-methylglutaric anhydride, 3-methylphthalic anhydride, 4-methoxybenzoic anhydride, 4-methylphthalic anhydride, benzoic anhydride, succinic anhydride, butylsuccinic anhydride, decylsuccinic anhydride, dodecylsuccinic anhydride, hexadecylsuccinic anhydride, octadecylsuccinic anhydride, octadecenylsuccinic anhydride, isooctadecenylsuccinic anhydride, tetradecenylsuccinic anhydride, nonenylsuccinic anhydride, trimellitic anhydride, butyric anhydride, propionic anhydride, heptanoic anhydride, decanoic anhydride, n-octanoic anhydride, nonanoic anhydride, oleic anhydride, valeric anhydride, palmitic anhydride, phenoxyacetic anhydride, pivalic anhydride, stearic anhydride, crotonic anhydride, diglycolic anhydride, glutaric anhydride, exo-3,6-epoxy-1,2,3,6-tetrahydrophthalic anhydride, itaconic anhydride, formic acid, acetic acid, propionic acid, ascorbic acid, citric acid, tartaric acid, maleic acid, fumaric acid, succinic acid, oxalic acid, benzoic acid, p-toluenesulfonic acid, glucuronic acid, hyaluronic acid, gluconic acid, hydrogen peroxide, phosphoric acid, nitric acid, nitrous acid, and boric acid. These compounds may be used alone or in combination.

The amount of the compound (II) added is not particularly limited. To achieve the storage stability of the conductive paste obtained, the amount of the compound (II) is normally 0.1 to 5 times the amount of an ethyleneimine unit in the polyethyleneimine (a) by mole equivalent and preferably 0.25 to 1 times by mole equivalent.

The melting point of the silver-containing powder mainly composed of the compound (X) or the compound (Y) and the silver nanoparticles (Z) is 130 to 200°C as described above. However, by adding the compound (II) having a functional group that can react with a nitrogen atom of the polyethyleneimine (a) to an aqueous dispersion of a silver-containing structure, a conductive paste whose melting point in a dry state is decreased by 20 to 30°C can be obtained. In a dry state, the melting point of a conductive paste that includes the compound (II) is in a range of 100 to 150°C and preferably 100 to 130°C.

In other words, by adding the compound (II) having a functional group that can react with a nitrogen atom of the polyethyleneimine (a), the surface charge of the silver nanoparticles (Z) is changed and dispersion stability is facilitated in a solvent. Furthermore, a polyethyleneimine chain bonded to the compound having a functional group that can react with a nitrogen atom of the polyethyleneimine is eliminated from the surfaces of silver nanoparticles when a solvent is removed, whereby the melting point of the conductive paste is decreased. Therefore, since the fusion of silver nanoparticles (Z) occurs without decomposing or removing a protective agent by heating in a conventional manner, sintering can be achieved at low temperature.

The silver-containing powder itself of the present invention has good dispersibility in various solvents and can be redispersed without using other dispersants. To obtain a conductive paste having better storage stability and dispersion stability, in particular to easily form a film on a plastic base, which has a poor interaction with a metal, and to improve the adhesiveness of the film, a hydrophilic polymer (III) is preferably used together.

The hydrophilic polymer (III) is not particularly limited. Examples of the hydrophilic polymer (III) include polymers such as polyoxyethylene, polyoxypropylene, polyvinyl alcohol, partially saponified polyvinyl alcohol, polyethylene glycol, polyethyleneimine, polypropyleneimine, polyhydroxyethyl acrylate, polyhydroxyethyl methacrylate, dimethylaminoethyl acrylate, dimethylaminoethyl methacrylate, polyacetylethyleneimine, polyacetylpropyleneimine, polypropionylethyleneimine, polypropionylpropyleneimine, polyacrylamide, polyisopropylacrylamide, polyvinylpyrrolidone, polyacyloxazoline, polyethyloxazoline, and polypropyloxazoline; and graft polymers and block polymers including chains of two or more types of polymers selected from the above-mentioned polymers. To achieve the adhesiveness to a plastic base and the dispersion stability of a conductive paste, polyethylene glycol, polyethyleneimine, polyvinyl alcohol, amino (meth)acrylate, polyvinylpyrrolidone, polyoxazoline, a reaction product of polyethylene glycol and polyethyleneimine are preferably used.

Other components that can be added to the conductive paste as an additive are not particularly limited. Examples of the other components include various conductive material components, components that improve the affinity and adhesiveness for electronic materials, components that smooth a surface or control projections and depressions, solvents having various boiling points, viscosity controlling agents, polymers other than the above-mentioned hydrophilic polymers, ceramics, coupling agents, and crosslinking agents.

In the conductive paste of the present invention, the above-mentioned various additives may be dispersed in a dispersion containing the silver-containing powder obtained by the above-described method, through a stirring method using a bead mill, a paint conditioner, an ultrasonic homogenizer, Filmics, a homogenizer, Disper, Three-One Motor, or the like; an ultrasonic method; a mixer method, a three-roll method, or a ball mill method. To obtain a well-dispersed conductive paste, multiple methods of the above-mentioned methods can be combined with each other to perform dispersion.

A method for applying the conductive paste on a solid material is not particularly limited. Examples of the method include a method using a spin coater, a bar coater, an applicator, a printing machine, a printer, a dispenser, or the like; a method of dipping a solid material in the conductive paste; a method using a flow gun, a flow coater, or the like; a spraying method using a spray; and a method using brush painting, puff painting, roller painting, or the like. The shape obtained by the application, ranging from a solid form to lines having various thicknesses, minute patterns, and designs, can be provided by selecting a suitable method from the various methods.

Since the conductive paste of the present invention has a high content of silver in the silver-containing powder used as a raw material and produces conductivity in the form of a dry film without removing the compound (X) or the compound (Y) used as a protective agent, the conductive paste can be applied to a plastic base, to which it has been difficult to apply a conductive paste. The shape and material of the plastic base are not particularly limited as long as the above-described conductive paste can be applied on the plastic substrate and a film can be formed. A film-like shape, a sheet-like shape, a plate-like shape, or a three-dimensional molded product, ranging from simple forms to complicated forms with a sculpture, can be employed. In particular, the conductive paste can be suitably applied to a flexible substrate having a film-like shape or a sheet-like shape. A substrate having a surface profile such as a smooth surface, an embossed surface, or a complicated surface with projections and depressions can be used. A substrate composed of an organic material such as a polymer or a substrate composed of a hybrid material obtained by mixing inorganic materials such as glass, a metal, and a ceramic with each other can be used.

Examples of the polymer include various organic materials such as polyethylene, polypropylene, polycarbonate, polyester, polystyrene, unsaturated polyester resin, vinyl chloride resin, epoxy resin, phenol resin, melamine resin, urea resin, AS resin, ABS resin, poly(meth)acrylate, poly(meth)acrylamide, polyvinyl alcohol, vinylidene chloride resin, acetal resin, polyamide, polyurethane, polyethylene terephthalate, polyethylene naphthalate, polybutylene terephthalate, polyimide, polyethersulfone, a liquid crystal polymer, polyphenylene sulfide, and polysulfone. Alternatively, these materials having a surface subjected to corona treatment or the like may be used.

The water contact angle of the plastic substrate composed of polyethylene terephthalate, polyethylene naphthalate, or polyimide is about 70°, which means hydrophobicity. Since a hydrophilic solution composition normally has poor wettability onto the hydrophobic substrate and thus is repelled, it is difficult to perform the application appropriately. However, although the conductive paste of the present invention uses a hydrophilic dispersion medium, it can be appropriately applied to the hydrophobic substrate due to the interaction between the hydrophobic substrate and the silver nanoparticles (Z) capped with the compound (X) or the compound (Y) used as a protective agent. Thus, the conductive paste of the present invention has good film-forming and printing properties.

Since the conductive paste used in the present invention produces good adhesiveness to the plastic substrate even if heated at a low temperature of 150°C or lower, it can be suitably applied to a flexible plastic substrate having a glass transition temperature of 180°C or lower.

In the present invention, a plastic substrate is obtained by heating a plastic substrate on which the conductive paste obtained as described above has been applied, but the method is not particularly limited. For example, a composite obtained by applying, coating, or stacking the conductive paste on a substrate by the above-described method, or a substrate filled with the conductive paste using a mold or the like is heated with a heating apparatus such as an electric furnace, a drier, an oven, a thermostat oven, or a hot stage. Alternatively, the conductive paste may be air-dried at a room temperature of 25 to 30°C and then heated. The heating conditions are not particularly limited, and are desirably selected in accordance with the usage, the substrate and additives used, and the like. The plastic substrate used in the present invention can be used even in the case where the glass transition temperature thereof is relatively low, such as 180°C or lower. Furthermore, if the heating temperature is excessively low, a dispersion medium left in the conductive paste is not sufficiently removed, and thus the characteristics such as adhesiveness and conductivity are sometimes not sufficiently produced. In view of the foregoing, the heating temperature is preferably in a range of 60 to 180°C and more preferably 80 to 180°C. In the case of a conductive paste that also includes the compound (II) having a functional group that can react with a nitrogen atom of the polyethyleneimine (a), sufficient conductivity can be produced even if the conductive paste is left at room temperature.

The plastic substrate obtained in the present invention is obtained by applying the above-described conductive paste on the above-described substrate, that is, by stacking, on a substrate, a conductive paste layer or an organic/inorganic compound layer in which silver nanoparticles are fused or crystallized by heat treatment or fire treatment. The conductive paste layer and the organic/inorganic compound layer may be a metal laminate obtained by repeatedly applying the same or different conductive paste layers and the organic/inorganic compound layers on a substrate multiple times. In this case, the shape, area, thickness, conditions, method, and the like of the application may be the same or different. Furthermore, a layer composed of a material that does not contain silver nanoparticles or a component obtained by fusing or crystallizing silver nanoparticles by the above-described treatment can be sandwiched between the same or different conductive paste layers repeatedly applied and between the same or different organic/inorganic compound layers repeatedly applied.

For the conductivity of a processed product using the conductive paste obtained in the present invention, the volume resistivity is normally $1 \times 10^{-3}$ $\Omega \cdot$cm or less, preferably $1 \times 10^{-4}$ $\Omega \cdot$cm or less, and more preferably $1 \times 10^{-5}$ $\Omega \cdot$cm or less.

The heating and fusion processes in which a silver film having good adhesiveness to a plastic substrate is formed in the present invention will be described. When the conductive paste is applied on a plastic substrate to form a film and then heated, the compound (X) or the compound (Y) with which the silver nanoparticles (Z) are capped is removed, and a satisfactory silver film is formed through the fusion between the silver nanoparticles (Z) or the crystal growth. Herein, it is believed that, since the compound (X) or the compound (Y) in the conductive paste is left on the surface of the silver film and works as a strong anchor for silver and the plastic substrate, satisfactory adhesiveness to various substrates is achieved, and there is also provided an added value in which the cause of cracking and fracture in the film is suppressed. In related art, a compound that is a protective agent of metal fine particles has to be removed by vaporization, decomposition, or the like when a film is formed. However, the present invention has a distinctive feature in which there is no need of removing the compound (X) or the compound (Y) that functions as a protective agent, and rather the coexistence of the compound (X) or the compound (Y) with the silver film provides the adhesiveness to the plastic substrate and a function that makes the film uniform.

The plastic substrate obtained in the present invention has both the properties of the silver nanoparticles (Z) such as chemical, electrical, magnetic, optical, and color material properties and the properties of the compound (X) or the compound (Y), which is an organic component, such as formability, a film formation property, adhesiveness, and flexibility. The application is not limited, and the plastic substrate can be used in a wide range of fields such as catalysts, electronic materials, magnetic materials, optical materials, various sensors, color materials, and medical examination applications. Since the amount of silver contained in a film or wiring line can be easily adjusted, an intended effect is efficiently produced.

The plastic substrate of the present invention is obtained using a plastic substrate by the above-described production method. A plastic substrate having no conductivity change even after a 180° bending test is repeatedly performed 100 times can be obtained. Specifically, a plastic substrate in which the rate of change of a sheet resistance value is 10% or less is obtained, which means good adhesiveness to a plastic substrate. The rate of change is calculated from the formula (1) below.

```
(Sheet resistance after test - sheet resistance before
test)/Sheet resistance before test    (1)
```

The rate of change can be set to 5% or less and furthermore 1% or less by selecting the types of plastic substrates and the heating conditions after the application. Therefore, the plastic substrate of the present invention is industrially quite useful.

Examples

The present invention will be further described in detail based on Examples, but is not limited to Examples. Herein, "%" represents "% by mass" unless otherwise specified.

In Examples, the following apparatuses were used.

$^1$H-NMR: AL 300, 300 Hz manufactured by JEOL Ltd.
Particle size measurement: FPAR-1000 manufactured by Otsuka Electronics Co., Ltd.
TEM observation: JEM-2200FS manufactured by JEOL Ltd.
TGA measurement: TG/DTA 6300 manufactured by SII NanoTechnology Inc.
Plasmon absorption spectrum: UV-3500 manufactured by Hitachi, Ltd.
Optical microscope: Fluorescent Microscope BX 60 manufactured by Olympus Corporation
Light scattering digital dust counter: M-3423 manufactured by Rex Co., Ltd.
Volume resistivity: Low Resistivity Measurement Meter Loresta EP manufactured by Mitsubishi Chemical Corporation
DSC measurement: DSC 7200 manufactured by SII NanoTechnology Inc.

Synthetic Example 1 [Synthetic example of compound (X-1)] For reference only.

Under a nitrogen atmosphere, a chloroform solution (30 ml) containing 9.6 g (50.0 mmol) of p-toluenesulfonic chloride was added dropwise to a mixed solution of 20.0 g (10.0 mmol) of methoxy polyethylene glycol [Mn = 2,000], 8.0 g (100.0 mmol) of pyridine, and 20 ml of chloroform for 30 minutes while being stirred in ice. After the addition, the mixture was further stirred in a bath at 40°C for 4 hours. After the completion of the reaction, 50 ml of chloroform was added to dilute the reaction solution. Subsequently, the reaction solution was washed with 100 ml of 5% hydrochloric acid aqueous solution, 100 ml of saturated sodium hydrogen carbonate aqueous solution, and 100 ml of saturated saline solution in that order. The reaction solution was then dried with magnesium sulfate, filtered, and vacuum concentrated.

The resultant solid was washed with hexane several times, filtered, and dried under reduced pressure at 80°C to obtain 22.0 g of tosylated product.

The measurement result of $^1$H-NMR of the resultant product is described below.

$^1$H-NMR (CDCl$_3$) measurement result:

$\delta$ (ppm): 7.82 (d), 7.28 (d), 3.74 to 3.54 (bs), 3.41 (s), 2.40 (s)

Under a nitrogen atmosphere, 5.39 g (2.5 mmol) of methoxy polyethylene glycol compound synthesized as described above and having a p-toluenesulfonyloxy group on the terminal thereof, 20.0 g (0.8 mmol) of branched polyethyleneimine (manufactured by Sigma-Aldrich Co., molecular weight: 25,000), 0.07 g of potassium carbonate, and 100 ml of N,N-dimethylacetamide were mixed with each other and stirred at 100°C for 6 hours. Subsequently, 300 ml of mixed solution (V/V = 1/2) of ethyl acetate and hexane was added to the resultant reaction mixture, and the mixture was thoroughly stirred at room temperature. The solid of the product was then filtered. The solid was washed with 100 ml of mixed solution (V/V = 1/2) of ethyl acetate and hexane twice, and dried under reduced pressure to obtain 24.4 g of solid compound (X-1) in which polyethylene glycol is bonded to branched polyethyleneimine.

The measurement result of $^1$H-NMR of the resultant product is described below.

$^1$H-NMR (CDCl$_3$) measurement result:

$\delta$ (ppm): 3.50 (s), 3.05 to 2.20 (m)

Synthetic Example 2 [Synthetic example of compound (Y-1)]

Under a nitrogen atmosphere, 18.7 g (20 meq) of bisphenol A epoxy resin EPICLON AM-040-P (manufactured by DIC Corporation, epoxy equivalent: 933), 1.28 g (7.5 mmol) of 4-phenylphenol, 0.26 ml (0.12 mol%) of 65% ethyltriphenylphosphonium acetate ethanol solution, and 50 ml of N,N-dimethylacetamide were caused to react with each other at 120°C for 6 hours. After standing to cool, the reaction mixture was added dropwise to 150 ml of water. The resulting precipitate was washed with methanol twice, and then dried under reduced pressure at 60°C to obtain a monofunctional epoxy resin. The yield of the product was 19.6 g and 98%.

The measurement result of $^1$H-NMR of the resultant monofunctional epoxy resin is described below.

$^1$H-NMR (CDCl$_3$) measurement result:

$\delta$ (ppm): 7.55 to 6.75 (m), 4.40 to 3.90 (m), 3.33 (m), 2.89 (m), 2.73 (m), 1.62 (s)

Under a nitrogen atmosphere, a solution of 14.4 g (0.48 mmol) of the compound (X-1) obtained in Synthetic Example 1 and 60 ml of methanol was added to a solution of 3.0 g (1.5 mmol) of the monofunctional epoxy resin obtained above and 50 ml of acetone, and the resultant solution was stirred at 60°C for 2 hours. After the completion of the reaction, the solvents were removed to obtain a compound (Y-1) in which polyethylene glycol and an epoxy resin were bonded to branched polyethyleneimine.

Example 1

At 25°C, 10.0 g of silver oxide was added to 138.8 g of an aqueous solution containing 0.592 g of the compound (X-1) obtained in Synthetic Example 1, and the mixture was stirred for 30 minutes. Subsequently, when 46.0 g of dimethylethanolamine was gradually added thereto while being stirred, the color of the reaction solution was changed to dark red and heat was slightly generated, but the reaction solution was left as it is and stirred at 25°C for 30 minutes. After that, 15.2 g of 10% ascorbic acid aqueous solution was gradually added thereto while being stirred. The stirring was performed for 20 hours at that temperature to obtain a dark red dispersion.

The resultant dispersion was sampled, and a peak of plasmon absorption spectrum was found at 400 nm through visible absorption spectrophotometry of a 10-fold diluted solution, which meant silver nanoparticles were produced. Furthermore, spherical silver nanoparticles were confirmed through TEM observation. As a result of measurement of TG-DTA, the content of silver in a solid was 97.2%.

A mixed solvent of 200 ml of isopropyl alcohol and 200 ml of hexane was added to the dispersion that was obtained above and whose reaction had been completed. The mixture was stirred for 2 minutes, and then subjected to centrifugal concentration at 3000 rpm for 5 minutes. After the supernatant was removed, a mixed solvent of 50 ml of isopropyl alcohol and 50 ml of hexane was added to the precipitate. The mixture was stirred for 2 minutes, and then subjected to centrifugal concentration at 3000 rpm for 5 minutes. After the supernatant was removed, 20 g of water was further added to the precipitate. The mixture was stirred for 2 minutes, and the organic solvents were removed under reduced pressure. After 10 g of water was further added thereto and stirring and dispersion were performed, the dispersion was frozen by being left in a refrigerator at -40°C for a whole day and night. The resultant dispersion was processed using a freeze drier (FDU-2200 manufactured by TOKYO RIKAKIKAI Co, Ltd.) for 24 hours to obtain 9.1 g of a flaky lump having a greenish gray metallic luster. As a result of the observation of an optical microscope, it was confirmed that the obtained silver-containing powder (solid) formed an aggregate having a size of several tens of micrometers. Through the measurement of TG-DTA, the content of silver in the powder was 97.4%. The average particle size of 100 silver nanoparticles that can be observed and randomly sampled from a transmission electron micrograph was 16.8 nm. The melting point measured by differential scanning calorimetry was 140 to 170°C.

Moreover, about 60 g of the obtained silver-containing powder was transferred to another container, and the measurement of suspended particles was performed by sampling the air of that workplace using a light scattering digital dust counter. The result was 0.005 mg/m$^3$ or less, and thus it was believed that there were almost no suspended particles in the air of the workplace. It was also confirmed that there was no change in the above-described properties even after the silver-containing powder was left to stand at room temperature (25°C) for 3 months.

A dispersion liquid having a solid content of 20% was prepared by stirring the obtained silver-containing powder in pure water for 3 hours to perform redispersion. The dispersion liquid was applied on a slide glass by performing spin coating at 700 rpm for 30 seconds using a spin coater to form a thin film. The thin film was heated on a hot plate at 180°C for 30 minutes. The volume resistivity of the film, which was corrected by measuring the thickness of the film using a laser confocal microscope, was 5.4 μΩ·cm.

Dispersion liquids were prepared by stirring the obtained silver-containing powder in ethanol, isopropyl alcohol, and a mixed solvent of ethanol and water, instead of pure water, for 3 hours to perform redispersion. The Table below shows the evaluation results of the dispersion stability and storage stability of the various dispersion liquids.

[Table 1]

| Solvent | Concentration (%) | Dispersion stability | Storage stability |
|---|---|---|---|
| Water | 20 | Good | Good |
| Water | 40 | Good | Good |
| Ethanol | 30 | Good | Good |
| Water/ethanol (80%/20%) | 10 | Good | Good |
| Water/ethanol (80%/20%) | 30 | Good | Good |

Dispersion stability: After the dispersion liquids were left to stand in a refrigerator at 5°C for 3 days, phase separation and dispersion state were observed through visual inspection.

Storage stability: After the dispersion liquids were left to stand in a refrigerator at 5°C for 3 months, the average particle size and shape of silver nanoparticles observed from a transmission electron micrograph were compared.

Example 2

When 23.0 g of dimethylethanolamine was gradually added to 77.0 g of an aqueous solution containing 0.263 g of the compound (Y-1) obtained in Synthetic Example 2 while being stirred, heat was slightly generated. Subsequently, when 5.0 g of silver nitrate was gradually added thereto at a reaction temperature of 45°C, the color of the reaction solution was changed to dark red. After that, the stirring was performed at a reaction temperature of 50°C for 4.5 hours to complete the reaction and to obtain a dark red dispersion.

The resultant dispersion was sampled, and a peak of plasmon absorption spectrum was found at around 400 nm through visible absorption spectrophotometry of a 10-fold diluted solution, which meant silver nanoparticles were produced. Furthermore, spherical silver nanoparticles (average particle size: 18.8 nm) were confirmed through TEM observation. As a result of measurement of TG-DTA, the content of silver in a solid was 96.6%.

A mixed solvent of 100 ml of isopropyl alcohol and 100 ml of hexane was added to the dispersion that was obtained above and whose reaction had been completed. The mixture was stirred for 2 minutes, and then subjected to centrifugal concentration at 3000 rpm for 5 minutes. After the supernatant was removed, a mixed solvent of 25 ml of isopropyl alcohol and 25 ml of hexane was added to the precipitate. The mixture was stirred for 2 minutes, and then subjected to centrifugal concentration at 3000 rpm for 5 minutes. After the supernatant was removed, 10 g of water was further added to the precipitate. The mixture was stirred for 2 minutes, and the organic solvents were removed under reduced pressure. After 5 g of water was further added thereto and stirring and dispersion were performed, the dispersion was frozen by being left in a refrigerator at -40°C for a whole day and night. The resultant dispersion was processed using a freeze drier (FDU-2200 manufactured by TOKYO RIKAKIKAI Co, Ltd.) for 12 hours to obtain 3.1 g of a flaky lump having a greenish gray metallic luster. A dispersion having a solid content of 30% was prepared by redispersing the lump in pure water. The dispersion was applied on a slide glass by performing spin coating at 700 rpm for 30 seconds using a spin coater to form a thin film. The thin film was heated on a hot plate at 180°C for 30 minutes. The resistivity of the film was 3.7 $\mu\Omega\cdot$cm.

Dispersion liquids were prepared by stirring the obtained silver-containing powder in ethanol, isopropyl alcohol, and a mixed solvent of ethanol and water, instead of pure water, for 3 hours to perform redispersion. The Table below shows the evaluation results of the dispersion stability and storage stability of the various dispersion liquids.

[Table 2]

| Solvent | Concentration (%) | Dispersion stability | Storage stability |
|---|---|---|---|
| Water | 30 | Good | Good |
| Ethanol | 20 | Good | Good |
| Ethanol | 40 | Good | Good |
| Water/ethanol (50%/50%) | 10 | Good | Good |
| Water/ethanol (50%/50%) | 40 | Good | Good |
| Isopropyl alcohol | 30 | Good | Good |

Example 3

A dispersion liquid having a solid content of 30% was prepared by adding water to the aqueous dispersion of the silver-containing powder obtained in Example 1. Propionaldehyde was added to the dispersion in an amount corresponding to 0.1 equivalents of an ethyleneimine unit in the polyethyleneimine, and the mixture was then stirred to obtain a conductive paste. This conductive paste was applied on a slide glass using a bar coater (RDS08) to form a silver film. The film was dried at a room temperature of 20 to 30°C for 1 hour, and part of the film was removed. As a result of DSC measurement, the melting point was 123°C. The silver film was heated at 150°C for 30 minutes together with the slide glass. As a result of the measurement of the film by a four-terminal method, the volume resistivity was 5.6 $\mu\Omega\cdot$cm.

Example 4

The same process as that in Example 3 was performed, except that the heating temperature in Example 3 was changed to 120°C. The volume resistivity was 9.8 $\mu\Omega\cdot$cm.

Example 5

A dispersion having a solid content of 30% was prepared by adding ethanol to the aqueous dispersion of the silver-containing powder obtained in Example 1. Nitric acid and acetic anhydride were added to the dispersion in an amount corresponding to 0.5 equivalents of an ethyleneimine unit in the polyethyleneimine and in an amount corresponding to 0.3 equivalents of the ethyleneimine unit, respectively, and the mixture was then stirred to obtain a conductive paste. This conductive paste was applied on a slide glass by the same method as in Example 3 to form a silver film. As a result of DSC measurement, the melting point was 123°C. The silver film was heated at 150°C for 30 minutes together with the slide glass. The volume resistivity was 4.7 $\mu\Omega\cdot$cm.

Example 6

The same process as that in Example 5 was performed, except that the heating temperature in Example 5 was changed to 120°C. The volume resistivity was 24 $\mu\Omega\cdot$cm.

Example 7

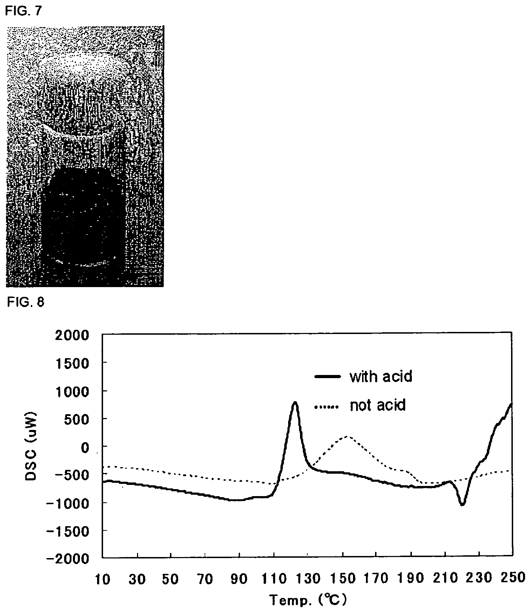

A dispersion having a solid content of 30% was prepared by adding water and ethanol to the aqueous dispersion of the silver-containing powder obtained in Example 1 so that the ratio of water to ethanol was 80:20. Nitric acid and acetic acid were added to the dispersion in an amount corresponding to 0.5 equivalents of an ethyleneimine unit in the polyethyleneimine and in an amount corresponding to 0.5 equivalents of the ethyleneimine unit, respectively, and the mixture was then stirred to obtain a conductive paste. This conductive paste was applied on a slide glass by the same method as in Example 3 to form a silver film. As a result of DSC measurement, the melting point was 122°C. The silver film was heated at 150°C for 30 minutes. The volume resistivity was 3.0 $\mu\Omega\cdot$cm. Fig. 8 shows a DSC chart of the silver film obtained by using a dispersion to which nitric acid and acetic acid had not been added and the silver film obtained by using a dispersion to which nitric acid and acetic acid had been added.

Example 8

The same process as that in Example 7 was performed, except that the heating temperature in Example 7 was changed to 120°C. The volume resistivity was 4.6 $\mu\Omega\cdot$cm.

Example 9

The same process as that in Example 7 was performed, except that the heating temperature in Example 7 was changed to 100°C. The volume resistivity was 7.7 $\mu\Omega\cdot$cm.

Example 10

The same process as that in Example 7 was performed, except that in Example 7, the heating temperature was changed to 80°C and the processing time was changed to 8 days. The volume resistivity was 13 $\mu\Omega\cdot$cm.

Example 11

The same process as that in Example 7 was performed, except that in Example 7, the heating temperature was changed to 60°C and the processing time was changed to 8 days. The volume resistivity was 18 $\mu\Omega\cdot$cm.

Example 12

The same process as that in Example 7 was performed, except that in Example 7, the silver film was left to stand at a room temperature of 25°C for 14 days. The volume resistivity was 18 $\mu\Omega\cdot$cm.

Example 13

The conductive paste obtained in Example 7 was applied on a polyethylene terephthalate film (glass transition temperature: about 70°C) using a bar coater (RDS08) and heated at 120°C for 30 minutes. The volume resistivity was 5.2 $\mu\Omega\cdot$cm (the polyethylene terephthalate film, which was a substrate, was slightly deformed, but the detachment of the silver film or the like was not found).

Example 14

The same process as that in Example 13 was performed, except that the heating temperature in Example 13 was changed to 100°C. The volume resistivity was 8.2 $\mu\Omega\cdot$cm (the polyethylene terephthalate film, which was a substrate, was slightly deformed, but the detachment of the silver film or the like was not found).

Example 15

The conductive paste obtained in Example 7 was applied on a polyethylene naphthalate film (glass transition temperature: about 110°C) using a bar coater (RDS08) and heated at 120°C for 30 minutes. The volume resistivity was 5.1 $\mu\Omega\cdot$cm (the polyethylene naphthalate film, which was a substrate, was slightly deformed, but the detachment of the silver film or the like was not found).

Example 16

The same process as that in Example 15 was performed, except that the heating temperature in Example 15 was changed to 100°C. The volume resistivity was 8.0 $\mu\Omega\cdot$cm.

Example 17

The conductive paste obtained in Example 7 was applied on glossy paper (MC glossy paper) using a bar coater (RDS08) and heated at 120°C for 30 minutes. The surface resistivity was $1.7 \times 10^{-1}$ Ω/square. In the entire area where the conductive paste was applied, the film was not cracked or detached.

Example 18

The same process as that in Example 17 was performed, except that the heating temperature in Example 17 was changed to 100°C. The surface resistivity was $8.3 \times 10^{-1}$ Ω/square. In the entire area where the conductive paste was applied, the film was not cracked or detached.

Example 19

A polymethyl methacrylate resin (glass transition temperature: about 110°C) having a quadrangular prism shape with a size of 1 cm $\times$ 1 cm was immersed in the conductive paste obtained in Example 7 for 1 minute, and heated at 120°C for 30 minutes. The surface resistivity was $6.0 \times 10^{-2}$ Ω/square. A silver film was formed on the entire surface of the resin having a quadrangular prism shape and used as a substrate, and was not cracked or detached.

Example 20

The same process as that in Example 17 was performed, except that the heating temperature in Example 17 was changed to 100°C. The surface resistivity was $1.1 \times 10^{0}$ Ω/square.

Example 21

The conductive paste obtained in Example 7 was injected into a polycarbonate tube (glass transition temperature: about 150°C) having an inner diameter of 1 cm using a syringe, and the liquid therein was removed after 1 minute using a syringe. The tube in which the conductive paste was applied to the interior wall was heated at 120°C for 30 minutes. The surface resistivity measured by cutting the tube was $6.3 \times 10^{-2}$ Ω/square. On the entire surface of the inside of the tube, a silver film was formed and was not cracked or detached.

Example 22

The same process as that in Example 21 was performed, except that the heating temperature in Example 21 was changed to 100°C. The surface resistivity was $1.0 \times 10^{0}$ Ω/square. On the entire surface of the inside of the tube, a silver film was formed and was not cracked or detached.

Example 23

A dispersion liquid having a solid content of 30% was prepared by adding water and ethanol to the aqueous dispersion of the silver-containing powder obtained in Example 2 so that the ratio of water to ethanol was 80:20. Nitric acid was added to the dispersion in an amount corresponding to 0.25 equivalents of an ethyleneimine unit in the polyethyleneimine, and the mixture was then stirred to obtain a conductive paste. This conductive paste was applied on a slide glass by the same method as in Example 3 to form a silver film. As a result of DSC measurement, the melting point was 135°C. The silver film was heated at 150°C for 30 minutes together with the slide glass. The volume resistivity was 6.6 μΩ·cm.

Example 24

The same process as that in Example 23 was performed, except that the heating temperature in Example 23 was changed to 120°C. The volume resistivity was 16 μΩ·cm.

Example 25

Water or ethanol was added to the silver-containing powder obtained in Example 1 in accordance with the compositions shown in Tables 3 to 5. The compound, obtained in Synthetic Example, in which polyethylene glycol was bonded to branched polyethyleneimine was optionally added thereto as a dispersion stabilizer in an amount of 1 wt% relative to that of the conductive paste. The mixture was uniformly dispersed to obtain a conductive paste having a solid content of 30%. Homo disper (manufactured by PRIMIX Corporation) was used for mixing and dispersion.

[Preparation of plastic substrate]

Plastic films shown in Table 3 and each having the same size were fixed on a glass substrate with a size of 15 cm × 15 cm using a double-faced adhesive tape, and then set on a spin coater (Model 1H-DX2 manufactured by MIKASA Co., Ltd.). A conductive paste was placed on the plastic films, and spin coating was performed at 700 rpm for 20 seconds. Furthermore, a conductive paste was placed on the plastic films, and applied thereon using a bar coater (RDS08).

The substrate subjected to the application using a spin coater or a bar coater was heated at 120°C, 150°C, or 180°C for 30 minutes to prepare a plastic substrate. The obtained plastic substrate was evaluated as follows. The Table shows the results.

[Evaluations of dispersibility, printability, and adhesiveness]

The dispersibility was evaluated as Good, Fair, and Poor by judging the luster of a mirror plane of the film obtained by applying a conductive paste on the plastic films through visual inspection.

The printability was evaluated as Good when the film obtained by applying a conductive paste on the plastic films had no unevenness and Poor when the film had unevenness due to crawling.

The adhesiveness was judged by performing a cross-cut test (JIS K 5400) and a 180° bending test (JIS K 5400) on the plastic substrate obtained by heating. After a 180° bending test was repeatedly performed 100 times using the film obtained by applying a conductive paste on the plastic films, the bent portion of the film was observed. The film having no cracks was evaluated as Good and the film having cracks was evaluated as Poor. Furthermore, the conductivities before and after the bending test were measured.

[Table 3]

| Dispersion medium | | Water | | | Ethanol | | |
|---|---|---|---|---|---|---|---|
| Dispersion stabilizer | | absence | | | absence | | |
| Method of application | | Spin coater | | | Bar coater | | |
| Dispersibility | | Fair | | | Fair | | |
| Printability | | Good | | | Good | | |
| Heating temperature | | 80°C | 120°C | 180°C | 80°C | 120°C | 180°C |
| Adhesiveness | PET | 100/100 | 100/100 | 100/100 | 100/100 | 100/100 | 100/100 |
| | PI | 100/100 | 100/100 | 100/100 | 100/100 | 100/100 | 100/100 |
| | PEN | 100/100 | 100/100 | 100/100 | 100/100 | 100/100 | 100/100 |

[Table 4]

| Dispersion medium | | Water | | |
|---|---|---|---|---|
| Dispersion stabilizer | | 1 wt% added | | |
| Method of application | | Spin coater | | |
| Dispersibility | | Good | | |
| Printability | | Good | | |
| Heating temperature | | 80°C | 120°C | 180°C |
| Adhesiveness | PET | 100/100 | 100/100 | 100/100 |
| | PI | 100/100 | 100/100 | 100/100 |
| | PEN | 100/100 | 100/100 | 100/100 |

[Table 5]

| Dispersion medium | Water | | Water | |
|---|---|---|---|---|
| Dispersion stabilizer | absence | | 1 wt% added | |
| Method of application | Spin coater | | Spin coater | |
| Substrate/heating temperature | PET/150°C | PI/150°C | PET/150°C | PI/150°C |
| 180° bending test | Good | Good | Good | Good |
| Conductivity before bending ($\Omega$/square) | 8.3 | 7.5 | 8.2 | 6.9 |
| Conductivity after bending ($\Omega$/square) | 8.5 | 7.8 | 8.5 | 7.3 |

Footnotes of Tables 3 to 5

PET: A film composed of polyethylene terephthalate (TOYOBO Ester Film, TOYOBO Co., Ltd.)
PI: A film composed of polyimide (Kapton Film, DU PONT-TORAY Co., Ltd.)
PEN: A film composed of polyethylene naphthalate (Teonex, Teijin DuPont Films Japan Limited)

Comparative Examples

The above-described tests were performed in the same manner using a nano-silver paste (alcohol dispersion liquid) manufactured by Nippon Paint Co., Ltd., but the substrate obtained by firing at 180°C or less failed the cross-cut test (test result: 0/100).

Comparative Example 1

The same process as that in Example 1 was performed in order to obtain silver-containing powder, except that 0.474 g of branched polyethyleneimine (SP-200 manufactured by NIPPON SHOKUBAI Co., Ltd.) was used instead of the compound (X-1). Although stirring was performed at a constant reaction temperature, a precipitate was produced as the reaction time passed. As a result, a dispersion of silver nanoparticles was not obtained. The precipitate had metallic luster and was not dispersed even in water or a polar solvent, and the plasmon absorption that is unique to silver nanoparticles was not observed.

Comparative Example 2

The same process as that in Example 2 was performed in order to obtain silver-containing powder, except that 0.210 g of branched polyethyleneimine (SP-200 manufactured by NIPPON SHOKUBAI Co., Ltd.) was used instead of the compound (Y-1). Although stirring was performed at a constant reaction temperature, a precipitate was produced as the reaction time passed. As a result, a dispersion of silver nanoparticles was not obtained. The precipitate had metallic luster and was not dispersed even in water or a polar solvent, and the plasmon absorption that is unique to silver nanoparticles was not observed.

Comparative Example 3

A freeze drying step was immediately performed on the dispersion obtained in the step (1) of Example 1, without performing the centrifugal concentration step that uses an organic solvent. It took about 10 days to complete the freeze drying because of a large amount of water, and a clayey lump was obtained instead of dry powder. A dispersion liquid having a solid content of 20% was prepared by stirring the obtained clayey silver-containing solid in distilled water for 3 hours in the same manner as in Example 1 to perform redispersion. The dispersion was applied on a slide glass by performing spin coating at 700 rpm for 30 seconds using a spin coater to form a thin film, but the thin film had a poor film-forming property. The thin film was heated on a hot plate at 180°C for 30 minutes. The volume resistivity of the film was over range (O. L.: inability to measure).

Comparative Example 4

A freeze drying step was immediately performed on the dark red dispersion obtained in the step (1) of Example 2, without performing the centrifugal concentration step that uses an organic solvent. It took about 5 days to complete the freeze drying because of a large amount of water, and a highly viscous lump was obtained instead of dry powder. A dispersion liquid having a solid content of 30% was prepared by stirring the obtained highly viscous silver-containing solid in distilled water for 3 hours in the same manner as in Example 2 to perform redispersion. The dispersion liquid was applied on a slide glass by performing spin coating at 700 rpm for 30 seconds using a spin coater to form a thin film, but the thin film had a poor film-forming property. The thin film was heated on a hot plate at 180°C for 30 minutes. The volume resistivity of the film was over range (O. L.: inability to measure).

Comparative Example 5

To remove nitrate ions in the dark red dispersion liquid obtained in the step (1) of Example 2, 100 g of the obtained dispersion was inserted in a dialysis tube (RVDF 500,000 manufactured by SPECTRA Inc.) and immersed in 2.5 L of water for about 16 hours. Water exchange was performed 3 times. Subsequently, the dialysate was subjected to centrifugal separation (8000 rpm, 5 minutes) twice to obtain paste silver-containing powder whose solid content was concentrated to 50%. It took about 55 hours in total to complete the process, though the processing time in Example 2 was about 1 hour or shorter. The amount of wastewater generated in the post-processing step was 30 times or more that of Example 2. Accordingly, it is obvious that the production method of the present invention is a method whose post-processing step is easily performed and that produces industrially practical silver-containing powder.

**Claims**

1. A conductive paste obtained by using a silver-containing powder comprising silver nanoparticles (Z) having an average particle size of 2 to 50 nm determined from a transmission electron micrograph, surfaces of the silver nanoparticles (Z) being coated with a compound (X) obtained by bonding polyethylene glycol (b) having a number average molecular weight of 500 to 5,000 to an amino group in polyethyleneimine (a) having a number average molecular weight of 500 to 50,000 or with a compound (Y) obtained by bonding polyethylene glycol (b) having a number average molecular weight of 500 to 5,000 and a linear epoxy resin (c) to an amino group in polyethyleneimine (a) having a number average molecular weight of 500 to 50,000, wherein the content of silver in the silver-containing powder is 95% or more by mass,
   wherein said conductive paste further comprises compound (II), wherein said compound (II) is an aldehyde that produces an alcohol through the reaction with a nitrogen atom of the polyethyleneimine (a) in the compound (X) or the compound (Y), forms an amide bond and forms quaternary ammonium ions, or an epoxy compound, or an acid anhydride, or a carboxylic acid or an inorganic acid.

2. The conductive paste according to Claim 1, wherein the melting point in the dry state is in the range of 100 to 150°C.

3. The conductive paste according to any one of Claims 1 or 2, further comprising a hydrophilic polymer (III).

4. The conductive pastes according to any one of claims 1 to 3, wherein compound (II) is formaldehyde, acetaldehyde, propionaldehyde, acrolein, benzaldehyde, cinnamaldehyde, perillaldehyde, ethylene oxide, propylene oxide, butylene oxide, 2,3-butylene oxide, isobutylene oxide, 1-methoxy-2-methylpropylene oxide, glycidyl butyrate, glycidyl methyl ether, 1,2-epoxyhexane, 1,2-epoxyheptane, 1,2-epoxyoctane, 1,2-epoxydecane, 1,2- epoxydodecane, 1,4-butanedioldiglycidyl ether, 1,2-epoxy-5- hexene, 1,2-epoxy-9-decene, 2-phenylpropylene oxide, stilbene oxide,_ethyl glycidyl ether, butyl glycidyl ether, glycidyl isopropyl ether, tert-butyl glycidyl ether, allyl glycidyl ether, glycidyl phenyl ether, benzyl glycidyl ether, glycidyl stearate, epoxysuccinic acid, 1,5-hexadiene diepoxide, 1,7-octadiene diepoxide, 2,2-bis(4-glycidyloxyphenyl)propane, ethylene glycol diglycidyl ether, neopentyl glycol diglycidyl ether, acetic anhydride, maleic anhydride, citraconic anhydride, diacetyl tartaric anhydride, phthalic anhydride, 1,2-cyclohexanedicarboxylic anhydride, 1-cyclohexene-1,2-dicarboxylic anhydride, o-acetylmalic anhydride, (2-methyl-2-propenyl)succinic anhydride, 1,2- naphthalic anhydride, 2,3-naphthalenedicarboxylic anhydride, 2,3-anthracenedicarboxylic anhydride, 2,3-dimethylmaleic anhydride, 3-methylglutaric anhydride, 3-methylphthalic anhydride, 4-methoxybenzoic anhydride, 4-methylphthalic anhydride, benzoic anhydride, succinic anhydride, butylsuccinic anhydride, decylsuccinic anhydride, dodecylsuccinic anhydride, hexadecylsuccinic anhydride, octadecylsuccinic anhydride, isooctadecenylsuccinic anhydride, octadecenylsuccinic anhydride, tetradecenylsuccinic anhydride, nonenylsuccinic anhydride, trimellitic anhydride, butyric anhydride, propionic anhydride, heptanoic anhydride, decanoic anhydride, n-octanoic anhydride, nonanoic anhydride, oleic anhydride, valeric anhydride, palmitic anhydride, phenoxyacetic anhydride, pivalic anhydride, stearic anhydride, crotonic anhydride, diglycolic anhydride,glutaric anhydride, exo-3,6-epoxy-1,2,3,6-tetrahydrophthalic anhydride, itaconic anhydride, formic acid, acetic acid, propionic acid, ascorbic acid, citric acid, tartaric acid, maleic acid, fumaric acid, succinic acid, oxalic acid, benzoic acid, p-toluenesulfonic acid, glucuronic acid, hyaluronic acid, gluconic acid, hydrogen peroxide, phosphoric acid, nitric acid, nitrous acid, or boric acid, alone or in combination.

5. A method for producing a silver-containing powder comprising silver nanoparticles (Z) having an average particle size of 2 to 50 nm determined from a transmission electron micrograph, surfaces of the silver nanoparticles (Z) being coated with a compound (X) obtained by bonding polyethylene glycol (b) having a number average molecular weight of 500 to 5,000 to an amino group in polyethyleneimine (a) having a number average molecular weight of 500 to 50,000 or with a compound (Y) obtained by bonding polyethylene glycol (b) having a number average molecular weight of 500 to 5,000 and a linear epoxy resin (c) to an amino group in polyethyleneimine (a) having a number average molecular weight of 500 to 50,000, wherein the content of silver in the silver-containing powder is 95% or more by mass,
wherein the method steps comprise:-

(1) a step of reducing a silver compound to silver nanoparticles (Z) having an average particle size of 2 to 50 nm determined from a transmission electron micrograph, in an aqueous medium in the presence of a compound (X) obtained by bonding polyethylene glycol (b) having a number average molecular weight of 500 to 5,000 to an amino group in polyethyleneimine (a) having a number average molecular weight of 500 to 50,000 or a compound (Y) obtained by bonding polyethylene glycol (b) having a number average molecular weight of 500 to 5,000 and a linear epoxy resin (c) to an amino group in polyethyleneimine (a) having a number average molecular weight of 500 to 50,000,
(2) a step of adding an organic solvent whose boiling point is 120°C or lower to a mixture, obtained in the step (1), of the compound (X) or the compound (Y), the silver nanoparticles (Z), and the aqueous medium, then performing concentration, and then adding water; and
(3) a step of freeze drying the concentrate obtained in the step (2).

6. The conductive paste according to claim 1, obtained by using the silver-containing powder made by the method according to Claim 5.

**Patentansprüche**

1. Leitende Paste, die unter Verwendung eines silberhaltigen Pulvers erhalten wird, das Silber-Nanopartikel (Z) mit einer aus einer transmissionselektronenmikroskopischen Aufnahme bestimmten mittleren Korngröße von 2 bis 50 nm umfasst, wobei Oberflächen der Silber-Nanopartikel (Z) mit einer Verbindung (X) beschichtet sind, die durch Binden von Polyethylenglycol (b) mit einem Zahlenmittel der Molekülmasse von 500 bis 5.000 an eine Aminogruppe in Polyethylenimin (a) mit einem Zahlenmittel der Molekülmasse von 500 bis 50.000 erhalten wird, oder mit einer Verbindung (Y), die durch Binden von Polyethylenglycol (b) mit einem Zahlenmittel der Molekülmasse von 500 bis 5.000 und einem linearen Epoxidharz (c) an eine Aminogruppe in Polyethylenimin (a) mit einem Zahlenmittel der Molekülmasse von 500 bis 50.000 erhalten wird, wobei der Silbergehalt in dem silberhaltigen Pulver 95 % oder mehr auf die Masse beträgt,
wobei die leitende Paste weiterhin eine Verbindung (II) umfasst, wobei die Verbindung (II) ein Aldehyd ist, das durch die Reaktion mit einem Stickstoffatom des Polyethylenimins (a) in der Verbindung (X) oder der Verbindung (Y) einen Alkohol erzeugt, eine Amidbindung bildet und quaternäre Ammoniumionen bildet, oder eine Epoxidverbindung oder ein Säureanhydrid oder eine Carbonsäure oder eine anorganische Säure.

2. Leitende Paste nach Anspruch 1, wobei der Schmelzpunkt im trockenen Zustand im Bereich von 100 bis 150°C liegt.

3. Leitende Paste nach Anspruch 1 oder 2, die weiterhin ein hydrophiles Polymer (III) umfasst.

4. Leitende Paste nach einem der Ansprüche 1 bis 3, wobei die Verbindung (II) Formaldehyd, Acetaldehyd, Propanal, Acrolein, Benzaldehyd, Zimtaldehyd, Perillaaldehyd, Ethylenoxid, Propylenoxid, Butylenoxid, 2,3-Butylenoxid, Isobutylenoxid, 1-Methoxy-2-methylpropylenoxid, Glycidylbutyrat, Glycidylmethylether, 1,2-Epoxyhexan, 1,2-Epoxyheptan, 1,2-Epoxyoctan, 1,2-Epoxydecan, 1,2-Epoxydodecan, 1,4-Butandioldiglycidylether, 1,2-Epoxy-5-hexen, 1,2-Epoxy-9-decen, 2-Phenylpropylenoxid, Stilbenoxid, Ethylglycidylether, Butylglycidylether, Glycidylisopropylether, tert-Butylglycidylether, Allylglycidylether, Glycidylphenylether, Benzylglycidylether, Glycidylstearat, Epoxybernsteinsäure, 1,5-Hexadiendiepoxid, 1,7-Octadiendiepoxid, 2,2-bis(4-Glycidyloxyphenyl)propan, Ethylenglycoldiglycidylether, Neopentylglycoldiglycidylether, Essigsäureanhydrid, Maleinsäureanhydrid, Citraconsäureanhydrid, Diacetylweinsäureanhydrid, Phthalsäureanhydrid, 1,2-Cyclohexandicarbonsäureanhydrid, 1-Cyclohexen-1,2-dicarbonsäureanhydrid, o-Acetyläpfelsäureanhydrid, (2-Methyl-2-propenyl)bernsteinsäureanhydrid, 1,2-Naphthalinsäureanhydrid, 2,3-Naphthalendicarbonsäureanhydrid, 2,3-Anthracendicarbonsäureanhydrid, 2,3-Dimethylmaleinsäureanhydrid, 3-Methylglutarsäureanhydrid, 3-Methylphthalsäureanhydrid, 4-Methoxybenzoesäureanhydrid, 4-Methylphthalsäureanhydrid, Benzoesäureanhydrid, Bernsteinsäureanhydrid, Butylbernsteinsäureanhydrid, Decylbernsteinsäureanhydrid, Dodecylbernsteinsäureanhydrid, Hexadecylbernsteinsäureanhydrid, Octadecylbernsteinsäureanhydrid, Isooctadecenylbernsteinsäure, Octadecenylbernsteinsäureanhydrid, Tetradecenylbernsteinsäureanhydrid, Nonenylbernsteinsäureanhydrid, Trimellithsäureanhydrid, Buttersäureanhydrid, Propionsäureanhydrid, Heptansäureanhydrid, Decansäureanhydrid, n-Octansäureanhydrid, Nonansäureanhydrid, Oleinsäureanhydrid, Valeriansäureanhydrid, Palmitinsäureanhydrid, Phenoxyessigsäureanhydrid, Pivalinsäureanhydrid, Stearinsäureanhydrid, Crotonsäureanhydrid, Diglycolsäureanhydrid, Glutarsäureanhydrid, exo-3,6-Epoxy-1,2,3,6-tetrahydrophthalsäureanhydrid, Itaconsäureanhydrid, Ameisensäure, Essigsäure, Propionsäure, Ascorbinsäure, Zitronensäure, Weinsäure, Maleinsäure, Fumarsäure, Bernsteinsäure, Oxalsäure, Benzoesäure, p-Toluolsulfonsäure, Glucuronsäure, Hyaluronsäure, Gluconsäure, Wasserstoffperoxid, Phosphorsäure, Salpetersäure, salpetrige Säure oder Borsäure ist, allein oder kombiniert.

5. Herstellungsverfahren für ein silberhaltiges Pulver, das Silber-Nanopartikel (Z) mit einer aus einer transmissionselektronenmikroskopischen Aufnahme bestimmten mittleren Korngröße von 2 bis 50 nm umfasst, wobei Oberflächen der Silber-Nanopartikel (Z) mit einer Verbindung (X) beschichtet sind, die durch Binden von Polyethylenglycol (b) mit einem Zahlenmittel der Molekülmasse von 500 bis 5.000 an eine Aminogruppe in Polyethylenimin (a) mit einem Zahlenmittel der Molekülmasse von 500 bis 50.000 erhalten wird, oder mit einer Verbindung (Y), die durch Binden von Polyethylenglycol (b) mit einem Zahlenmittel der Molekülmasse von 500 bis 5.000 und einem linearen Epoxidharz (c) an eine Aminogruppe in Polyethylenimin (a) mit einem Zahlenmittel der Molekülmasse von 500 bis 50.000 erhalten wird, wobei der Silbergehalt in dem silberhaltigen Pulver 95 % oder mehr auf die Masse beträgt, wobei die Verfahrensschritte Folgendes umfassen:-

(1) einen Schritt zum Reduzieren einer Silberverbindung zu Silber-Nanopartikeln (Z) mit einer aus einer transmissionselektronenmikroskopischen Aufnahme bestimmten mittleren Korngröße von 2 bis 50 nm, in einem wässrigen Medium in der Gegenwart einer Verbindung (X), die durch Binden von Polyethylenglycol (b) mit einem Zahlenmittel der Molekülmasse von 500 bis 5.000 an eine Aminogruppe in Polyethylenimin (a) mit einem Zahlenmittel der Molekülmasse von 500 bis 50.000 erhalten wird, oder einer Verbindung (Y), die durch Binden von Polyethylenglycol (b) mit einem Zahlenmittel der Molekülmasse von 500 bis 5.000 und einem linearen Epoxidharz (c) an eine Aminogruppe in Polyethylenimin (a) mit einem Zahlenmittel der Molekülmasse von 500 bis 50.000 erhalten wird,
(2) einen Schritt des Zugebens von einem organischen Lösungsmittel, dessen Siedepunkt maximal 120°C beträgt, zu einem Gemisch, das in Schritt (1) erhalten wird, aus der Verbindung (X) oder der Verbindung (Y), den Silber-Nanopartikeln (Z) und dem wässrigen Medium, des anschließenden Konzentrierens und des anschließenden Zugebens von Wasser; und
(3) einen Schritt des Gefriertrocknens des in Schritt (2) erhaltenen Konzentrats.

6. Leitende Paste nach Anspruch 1, die unter Verwendung des silberhaltigen Pulvers erhalten wird, das mit dem Verfahren nach Anspruch 5 hergestellt wird.

**Revendications**

1. Pâte conductrice obtenue en utilisant une poudre contenant de l'argent comprenant des nanoparticules d'argent (Z) ayant une taille particulaire moyenne de 2 à 50 nm déterminée à partir d'une micrographie électronique de transmission, des surfaces des nanoparticules d'argent (Z) étant enrobées d'un composé (X) obtenu par liaison de polyéthylèneglycol (b) ayant un poids moléculaire moyen en nombre de 500 à 5 000 à un groupement amino de polyéthylèneimine (a) ayant un poids moléculaire moyen en nombre de 500 à 50 000 ou à un composé (Y) obtenu par liaison de polyéthylèneglycol (b) ayant un poids moléculaire moyen en nombre de 500 à 5 000 et une résine époxyde linéaire (c) à un groupement amino de polyéthylèneimine (a) ayant un poids moléculaire moyen en nombre de 500 à 50 000, dans laquelle la teneur en argent de la poudre contenant de l'argent est de 95 % ou plus en masse, dans laquelle ladite pâte conductrice comprend en outre le composé (II), dans laquelle ledit composé (II) est un aldéhyde qui produit un alcool par réaction avec un atome d'azote de polyéthylèneimine (a) dans le composé (X) ou dans le composé (Y), forme une liaison amide et forme des ions d'ammonium quaternaire, ou un composé époxyde ou un anhydride d'acide ou un acide carboxylique ou un acide inorganique.

**2.** Pâte conductrice selon la revendication 1, dans laquelle le point de fusion à l'état sec se situe dans la plage de 100 à 150 °C.

**3.** Pâte conductrice selon l'une quelconque des revendications 1 ou 2, comprenant en outre un polymère hydrophile (III).

**4.** Pâtes conductrices selon l'une quelconque des revendications 1 à 3, dans lesquelles le composé (II) est le formaldéhyde, l'acétaldéhyde, le propionaldéhyde, l'acroléine, le benzaldéhyde, le cinnamaldéhyde, le périllaldéhyde, l'oxyde d'éthylène, l'oxyde de propylène, l'oxyde de butylène, l'oxyde de 2,3-butylène, l'oxyde d'isobutylène, l'oxyde de 1-méthoxy-2-méthylpropylène, le butyrate de glycidyle, le glycidylméthyléther, le 1,2-époxyhexane, le 1,2-époxyheptane, le 1,2-époxyoctane, le 1,2-époxydécane, le 1,2-époxydodécane, le 1,4-butanedioldiglycidyléther, le 1,2-époxy-5-hexène, le 1,2-époxy-9-décène, l'oxyde de 2-phénylpropylène, l'oxyde de stilbène, le glydicyléther d'éthyle, le glycidyléther de butyle, l'isopropyléther de glycidyle, le glycidyléther de tert-butyle, le glycidyléther d'allyle, le phényléther de glydicyle, le glycidyléther de benzyle, le stéarate de glycidyle, l'acide époxysuccinique, le diépoxyde de 1,5-hexadiène, le diépoxyde de 1,7-octadiène, le 2,2-bis(4-glydicyloxyphényl)propane, le diglycidyléther d'éthylèneglycol, le diglycidyléther de néopentylglycol, l'anhydride acétique, l'anhydride maléique, l'anhydride citraconique, l'anhydride de diacétyltartrique, l'anhydride phtalique, l'anhydride 1,2-cyclohexanedicarboxylique, l'anhydride 1-cyclohexène-1,2-dicarboxylique, l'anhydride o-acétylmalique, l'anhydride (2-méthyl-2-propényl)-succinique, l'anhydride 1,2-naphtalique, l'anhydride 2,3-naphtalènedicarboxylique, l'anhydride 2,3-anthracènedicarboxylique, l'anhydride 2,3-diméthylmaléique, l'anhydride 3-méthylglutarique, l'anhydride 3-méthylphtalique, l'anhydride 4-méthoxybenzoïque, l'anhydride 4-méthylphtalique, l'anhydride benzoïque, l'anhydride succinique, l'anhydride butylsuccinique, l'anhydride décylsuccinique, l'anhydride dodécylsucciique, l'anhydride hexadécylsuccinique, l'anhydride octadécylsuccinique, l'anhydride isooctadécénylsuccinique, l'anhydride octadécénylsuccinique, l'anhydride tétradécénylsuccinique, l'anhydride nonénylsuccinique, l'anhydride trimellitique, l'anhydride butyrique, l'anhydride propionique, l'anhydride heptanoïque, l'anhydride décanoïque, l'anhydride n-octanoïque, l'anhydride nonanoïque, l'anhydride oléique, l'anhydride valérique, l'anhydride palmitique, l'anhydride phénoxyacétique, l'anhydride pivalique, l'anhydride stéarique, l'anhydride crotonique, l'anhydride diglycolique, l'anhydride glutarique, l'anhydride exo-3,6-époxy-1,2,3,6-tétrahydrophtalique, l'anhydride itaconique, l'acide formique, l'acide acétique, l'acide propionique, l'acide ascorbique, l'acide citrique, l'acide tartrique, l'acide maléique, l'acide fumarique, l'acide succinique, l'acide oxalique, l'acide benzoïque, l'acide p-toluènesulfonique, l'acide glucuronique, l'acide hyaluronique, l'acide gluconique, le peroxyde d'hydrogène, l'acide phosphorique, l'acide nitrique, l'acide nitreux ou l'acide borique, seuls ou en combinaison.

**5.** Procédé de production d'un poudre contenant de l'argent comprenant des nanoparticules d'argent (Z) ayant une taille particulaire moyenne de 2 à 50 nm déterminée à partir d'une micrographie électronique par transmission, des surfaces des nanoparticules d'argent (Z) étant revêtues d'un composé (X) obtenu par liaison de polyéthylèneglycol (b) ayant un poids moléculaire moyen en nombre de 500 à 5 000 à un groupement amino de polyéthèneimine (a) ayant un poids moléculaire moyen en nombre de 500 à 50 000 ou à un composé (Y) obtenu par liaison de polyéthylèneglycol (b) ayant un poids moléculaire moyen en nombre de 500 à 5 000 et une résine époxyde linéaire (c) à un groupement amino de polyéthylèneimine (a) ayant un poids moléculaire moyen en nombre de 500 à 50 000, dans lequel la teneur en argent dans la poudre contenant de l'argent est de 95 % ou plus en masse, dans lequel les étapes comprennent :

(1) une étape de réduction d'un composé d'argent en nanoparticules d'argent (Z) ayant une taille particulaire moyenne de 2 à 50 nm déterminée à partir d'une micrographie électronique par transmission, dans un milieu aqueux en présence d'un composé (X) obtenu en liant du polyéthylèneglycol (b) ayant un poids moléculaire moyen en nombre de 500 à 5 000 à un groupement amino de polyéthylèneimine (a) ayant un poids moléculaire moyen en nombre de 500 à 50000 ou un composé (Y) obtenu par liaison de polyéthylèneglycol (b) ayant un poids moléculaire moyen en nombre de 500 à 5 000 et une résine époxyde linéaire (c) à un groupement amino de polyéthylèneimine (a) ayant un poids moléculaire moyen en nombre de 500 à 50 000,
(2) une étape d'addition d'un solvant organique dont le point d'ébullition est de 120 °C ou moins à un mélange obtenu à l'étape (1) du composé (X) ou du composé (Y), des nanoparticules d'argent (Z) et du milieu aqueux en effectuant ensuite la concentration et en ajoutant ensuite de l'eau ; et
(3) une étape de lyophilisation du concentré obtenu à l'étape (2).

**6.** Pâte conductrice selon la revendication 1, obtenue en utilisant la poudre contenant de l'argent préparée par le procédé selon la revendication 5.

FIG. 1

50nm

FIG. 2

FIG. 3

FIG. 4

FIG. 5

100nm

FIG. 6

FIG. 7

FIG. 8

**EP 2 305 402 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008018123 A
- JP 2004074267 A
- JP 11319538 A
- JP 2006257484 A
- JP 2008037884 A
- JP 2007186777 A
- WO 2005037465 A

- JP 2002134878 A
- JP 2006183072 A
- JP 2003201333 A
- JP 2006213887 A
- JP 4026662 B
- JP 4026664 B